# EUROPEAN PATENT APPLICATION

(11) **EP 1 291 856 A2**
(43) Date of publication of application: **12.03.2003**
(21) Application number: 02255647.6
(22) Date of filing: 13.08.2002
(51) Int. Cl.: G11B 7/005, G11B 7/09, G11B 7/007

(54) **Information reproduction apparatus and optical recording medium**

(30) Priority: 13.08.2001 JP 2001245228
(71) Applicant: Pioneer Corporation, Meguro-ku, Tokyo (JP)
(72) Inventor: Kuribayashi, Hiroki., Pioneer Corporation, Tsurugashima-shi, Saitama-ken (JP); Yanagisawa, Takuma., Pioneer Corporation, Tsurugashima-shi, Saitama-ken (JP)
(74) Representative: Haley, Stephen

(57) **Abstract**

An information reproduction apparatus for reading information of an optical recording medium is provided with: a first detecting device (152) which supplies a difference between respective output signals optically obtained by a pair of detectors for reading information of a first track (MT); a second detecting device (151) and a third detecting device (153) which supply a difference between respective output signals optically obtained by a pair of detectors for reading information of a second track (ST1) and a third track (ST2) respectively, the third and second tracks (ST1,ST2) being placed on opposite sides of the first track (MT); a crosstalk extracting device (205,206) which extracts crosstalk caused by the second and third tracks (ST1,ST2), which is included in a detected signal supplied from the first detecting device (152); and a tracking control device (TC3,TA3) which executes tracking control for the first detecting device (152) based on a balance between the crosstalks caused by the second and third tracks .

An optical recording medium with a track pitch, normalised by λ/NA, in the range 0.625 and 0.690 is also disclosed.

## Description

The present invention relates to an information reproduction apparatus which reproduces information contained in an optical recording medium, and the optical recording medium which is capable of effectively using such an information reproduction apparatus. More particularly, the present invention relates to an information reproduction apparatus and an optical recording medium capable of achieving precise tracking control.

Recently, optical discs represented by CD and DVD are used practically. Specifically, CD-R (CD-Recordable) which can record digital data only once and CD-RW (CD-ReWritable) which can rewrite digital data a plurality of times, as well as CD-DA (CD-Digital Audio) that is a recording medium for playback-only, have been put into practical use.

At a time of recording and reproducing in an optical disc, it is necessary to rotate the optical disc at a predetermined speed. A playback-only recording medium can determine a predetermined speed by synchronizing the rotating speed with the reproducing frequency of digital data at playback. Contrarily, a recordable recording medium such as CD-R and CD-RW cannot control the rotating speed in the above way, because digital data is not initially recorded on the tracks. Therefore, in the recordable medium, tracks are wobbled in correspondence with address information, thereby controlling a rotating speed based on wobble signals read from the tracks and recognizing the addresses of the tracks.

A push-pull technique is known as a tracking method of an optical head in a system employing such an optical disk, and in particular, a tracking method during data recording. This method utilizes the fact that a push-pull signal of a wobble signal varies according to de-tracking of a laser spot.

However, in the push-pull method, an actuator vibrates an objective lens of a head, whereby a positional relationship between a detector and an optical axis of the objective lens is displaced, and, if a radial tilt occurs between an optical disk and the objective lens, correct tracking control cannot be performed.

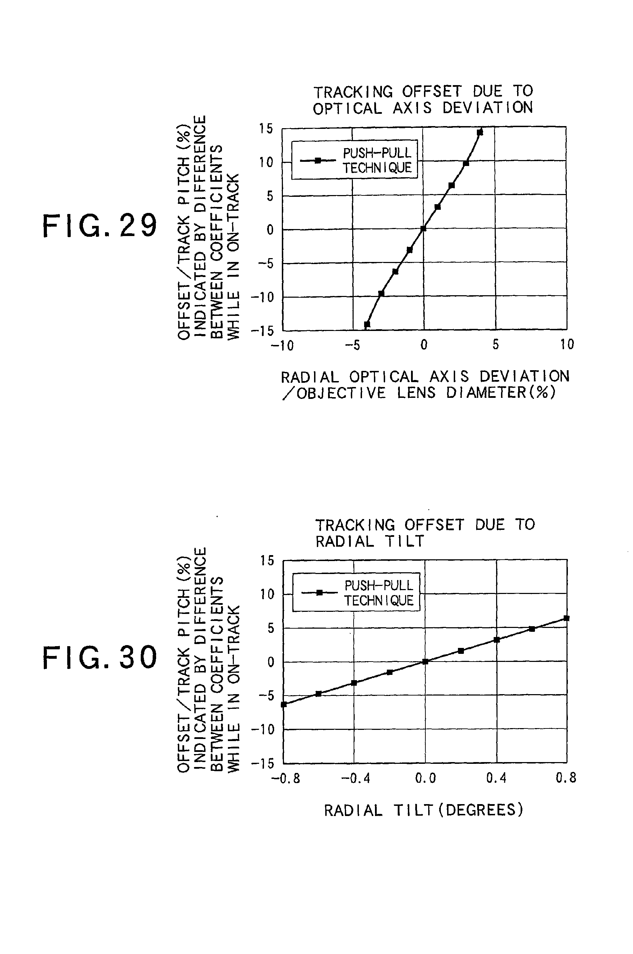

FIG. 29 shows a simulation result of a relationship between displacement of an optical axis in a case where the number of apertures NA = 0.6, a wavelength λ = 650 nm, a track pitch = 683 nm, and a groove depth = λ /10 and a tracking offset in the push-pull technique. In FIG. 29, the vertical axis indicates a rate of a tracking offset to a tracking pitch, and the horizontal axis indicates a displacement between a detector and an objective lens in a radial direction, respectively.

FIG. 30 shows a simulation result of a relationship between a radial tilt in the similar case and a tracking offset in the push-pull technique. In FIG. 30, the vertical axis indicates a rate of a tracking offset to a tracking pitch, and the horizontal axis indicates a radial tilt between an optical disk and an objective lens, respectively.

As shown in FIGS. 29 and 30, in the push-pull technique, it is found that there occurs a tracking offset due to a displacement (a radial lens shift) between the detector and the optical axis of the objective lens or due to a radial tilt between the optical disk and the objective lens.

On the other hand, instead of the push-pull technique, a method of acquiring tracking information by employing a cross talk balance of an RF signal is also known (Japanese Patent Application Laid-open No. 11-175990). However, this method cannot be employed in the case where RF data is unrecorded. In addition, even after the RF data has been recorded, a cross talk balance is significantly changed due to a radial tilt. Thus, there is a problem that precise tracking cannot be performed.

It is an object of the present invention to provide an information reproduction apparatus and an optical recording medium capable of executing precise tracking control without being affected by a radial tilt or the like even if RF data is unrecorded.

The above object of the present invention can be achieved by an information reproduction apparatus of the present invention for reading information of an optical recording medium (DK). The apparatus is provided with: a first detecting device (152) which supplies a difference between respective output signals optically obtained by a pair of detectors for reading information of a first track (MT); a second detecting device (151) which supplies a difference between respective output signals optically obtained by a pair of detectors for reading information of a second track (ST1) adjacent to the first track (MT); a third detecting device (153) which supplies a difference between respective output signals optically obtained by a pair of detectors for reading information of a third track (ST2) adjacent to the first track (MT), the third track (ST2) and the second track (ST1) being placed on opposite sides of the first track (MT); a crosstalk extracting device (205, 206) which extracts crosstalk caused by the second track (ST1) and the third track (ST2), which is included in a detected signal supplied from the first detecting device (152); and a tracking control device (TC3, TA3) which executes tracking control for the first detecting device (152) based on a balance between the crosstalk caused by the second track (ST1) and the crosstalk caused by the third track (ST2).

According to the present invention, tracking control can be executed even if RF data is not recorded, and precise tracking can be achieved without being affected by radial tilt, etc.

The first detecting device (152), the second detecting device (151) and the third detecting device (153) may detect wobbles of tracks formed on the optical recording medium (DK).

In this case, tracking control is executed by use of the crosstalk of wobbles.

The apparatus may be provided with: a coefficient controlling device (205b, 206b) which controls a coefficient based on the crosstalk extracted by the crosstalk extracting device (205, 206); and a crosstalk canceling device (211, 212) which cancels the above crosstalk based on the coefficient calculated by the coefficient controlling device (205, 206), then, the tracking control device (TC3, TA3) may execute tracking control for the first detecting device (152) based on a balance between coefficients calculated by the coefficient controlling device (205b, 206b).

In this case, since the tracking control for the first detecting device based on the balance between coefficients calculated by the coefficient controlling device, precise tracking can be achieved.

The tracking control device (TC3, TA3) may execute the tracking control so that a difference between a coefficient based on the crosstalk caused by the second track (ST1) and a coefficient based on the crosstalk caused by the third track (ST2) becomes zero.

In this case, since the tracking control is executed so that a difference between coefficients becomes zero, precise tracking can be achieved.

The apparatus may be provided with: a first demodulating device (202) which demodulates a detected signal supplied from the first detecting device (152); a second demodulating device (201) which demodulates a detected signal supplied from the second detecting device (151); and a third demodulating device (203) which demodulates a detected signal supplied from the third detecting device (153). Then, the coefficient controlling device (205b, 206b) may control the coefficient based on the crosstalk extracted by a demodulated signal obtained by the first demodulating device (202).

In this case, the crosstalk included the demodulated signal and caused by the second track and the third track are extracted, then the coefficient is controlled on the basis of the extracted crosstalk. Therefore, the effect of noise is reduced, and precise tracking can be achieved.

The first demodulating device (58), the second demodulating device (57) and the third demodulating device (59) may demodulate the detected signal by use of two carrier signals having different phases respectively.

In this case, the crosstalk can be precisely extracted regardless of a phase relationship of wobbles between tracks, so that precise tracking can be executed all the time.

The apparatus may be provided with: a carrier signal generating device (86) which generates a carrier signal of the fist track (MT), the carrier signal being supplied to the second demodulating device (201) and the third demodulating device (203); and a phase adjusting device (217, 218) which adjusts phases of the carrier signals in conformity to the phases of outputted signals from the first detecting device (152), the second detecting device (151) and the third detecting device (153).

In this case, the phase of the signals obtained via the second detecting device and the third detecting device corresponds to an actual crosstalk, so that precise tracking can be achieved.

The first demodulating device (202), the second demodulating device (201) and the third demodulating device (203) may demodulate wobbles which are phase-demodulated.

In this case, tracking control is executed by use of the crosstalk of wobbles.

The apparatus may be provided with a compensation device (217, 218) which compensates for timing corresponding to the displacements in the directions of reading information in the first detecting device (152), the second detecting device (151) and the third detecting device (153). Then, the tracking control device (TC, TA) may execute tracking control for the first detecting device (152) based on a balance between the crosstalk caused by the second track (ST1) and the crosstalk caused by the third track (ST2), which are extracted by the crosstalk extracting device (205, 206), under the condition where the compensation device (217, 218) compensates for timing of signals supplied from the first detecting device (152), the second detecting device (151) and the third detecting device (153) so as to be in phase with each other.

In this case, the timing of the signals obtained via the second detecting device and the third detecting device corresponds to an actual crosstalk, so that precise tracking can be achieved.

The apparatus may be provided with a crosstalk balance adjusting device (51, 53) which adjusts the balance between the crosstalk caused by the second track (ST1) and the crosstalk caused by the third track (ST2) in response to signal amplitudes of detected signals (Ssub1, Ssub2) supplied from the second detecting device (151) and the third detecting device (153).

In this case, since changes of the balance based on the changes of the amplitudes of detected signals supplied from the second detecting device and the third detecting device is suppressed, precise tracking can be achieved.

The crosstalk balance adjusting device (51, 53) may keep outputted signals (Ssub1, Ssub2) from the second detecting device (151) and the third detecting device (153) at a constant level.

The crosstalk balance adjusting device (82, 83) may adjust the balance in response to signal amplitudes of detected signals (Ssub1, Ssub2) supplied from the second detecting device (151) and the third detecting device (153), the balance being obtained on the basis of the crosstalk extracted by the crosstalk extracting device (78, 79).

The crosstalk balance adjusting device (51, 53) may adjust the balance on the basis of a signal obtained by demodulating the detected signal (Ssub1, Ssub2) supplied from the second detecting device (151) and the third detecting device (153).

In this case, there are merits such that the crosstalk balance adjusting device can be operated accurately since noise components in signals can be reduced as compared to the case where a detected signal before demodulation is directly inputted, for example.

The crosstalk balance adjusting device (52) may adjust a value of the crosstalk extracted by the crosstalk extracting device (61, 62), in response to signal amplitudes of detected signals supplied from the first detecting device (152).

In this case, it is possible to prevent de-tracking detection sensitivity when reproduction beams deviate from on-track from being changed.

An optical recording medium (DK) of the present invention is one in which information is recorded by use of a groove recording method and modulated and wobbled, and is one in which further information can be recorded, then a value obtained by normalizing a track pitch by λ /NA is between 0.625 and 0.690 wherein λ indicates a wavelength of an optical system for recording and reproduction, and NA indicates the number of apertures of an objective lens (104) in the optical system.

According to the optical recording medium, if the information reproduction apparatus of the present invention is employed, almost no offset due to a tilt occurs. Therefore, an information reproduction method which is employed in the information reproduction apparatus can be utilized effectively.

Although the present invention has been described with the reference numeral attached in a parenthesis in the accompanying drawings for easy understanding, it is not restricted to the form of the drawings.

### In the Drawings;

FIG. 1 is a view showing a basic configuration of an information reproduction apparatus according to the present invention;
FIG. 2A is a view showing a difference between coefficients relevant to de-tracking;
FIG. 2B is a view showing a rate of offset indicated by a difference between coefficients while in on-track;
FIG. 2C is a view showing a relationship between a target value offset and a radial tile;
FIG. 3 is a view showing a simulation result of a deviation quantity of a tracking target value when a track pitch is set as a parameter;
FIG. 4 is a view showing another basic configuration of the information reproduction apparatus of the present invention;
FIG. 5 is a view showing another basic configuration of the information reproduction apparatus of the present invention;
FIG. 6 is a circuit diagram depicting a configuration of one embodiment of the information reproduction apparatus;
FIG. 7 is a view showing a configuration of an optical system for reading information recorded in an optical disk;
FIG. 8 is a view showing an address information recording system;
FIG. 9A is a view showing a relationship among a wobble signal, a carrier signal, and a multiplication signal at a demodulation part;
FIG. 9B is a view showing an exemplary circuit employed for demodulation at a demodulation part;
FIG. 10 is a view schematically depicting an example of an adaptive coefficient control method;
FIG. 11 is a view showing a waveform after demodulation, of a main track, and an ideal waveform which does not include a cross talk;
FIG. 12 is a conceptual view showing a block diagram for detecting an error;
FIG. 13 is a view showing a waveform after demodulation, of a main track, and an ideal waveform which does not include a cross talk;
FIG. 14 is a conceptual view showing a block diagram for detecting an error;
FIG. 15 is a view showing a waveform after demodulation, of a main track, and an ideal waveform which does not include a cross talk;
FIG. 16 is a conceptual view showing a block diagram for detecting an error;
FIG. 17A is a view showing an effect of cross talk when phase relationships in wobble signals between the adjacent tracks are different from each other (in case of ±0/±180 degrees);
FIG. 17B is a view showing an effect of cross talk when phase relationships in wobble signals between the adjacent tracks are different from each other (in case of ±45/±135 degrees);
FIG. 17C is a view showing an effect of cross talk when phase relationships in wobble signals between the adjacent tracks are different from each other (in case of ±90 degrees);
FIG. 18 is a view showing a computation result of a wobble cross talk;
FIG. 19 is a view showing a wobble signal when reproduction is performed on a groove in which an RF data is not recorded and a wobble signal when reproduction is performed on an RF data recorded groove;
FIG. 20 is a view showing a case in which RF data is unrecorded in one of the adjacent tracks, and RF data is recorded in the other track;
FIG. 21 is a view showing a simulation result of an offset of a target value signal of tracking in the case of FIG. 20;
FIG. 22 is a view showing an exemplary configuration of an information reproduction apparatus;
FIG. 23 is a view showing a configuration of an AGC circuit;
FIG. 24 is a view showing a configuration of a carrier generation unit;
FIG. 25 is a view showing a configuration of a coefficient control unit;
FIG. 26 is a view showing an image of a correlation detection vector in a two-dimensional manner at the coefficient control unit;
FIG. 27A is a view showing a simulation result of a difference between coefficients in case of the presence or absence of an AGC circuit;
FIG. 27B is a view showing a simulation result of a difference between coefficients in the case where level adjustment of a main track signal is eliminated;
FIG. 28 is a view showing another exemplary configuration of the information reproduction apparatus;
FIG. 29 is a view showing a simulation result of a relationship between an optical axis deviation with a push-pull technique and a tracking offset; and
FIG. 30 is a view showing a simulation result of a relationship between a radial tile with the push-pull technique and a tracking offset.

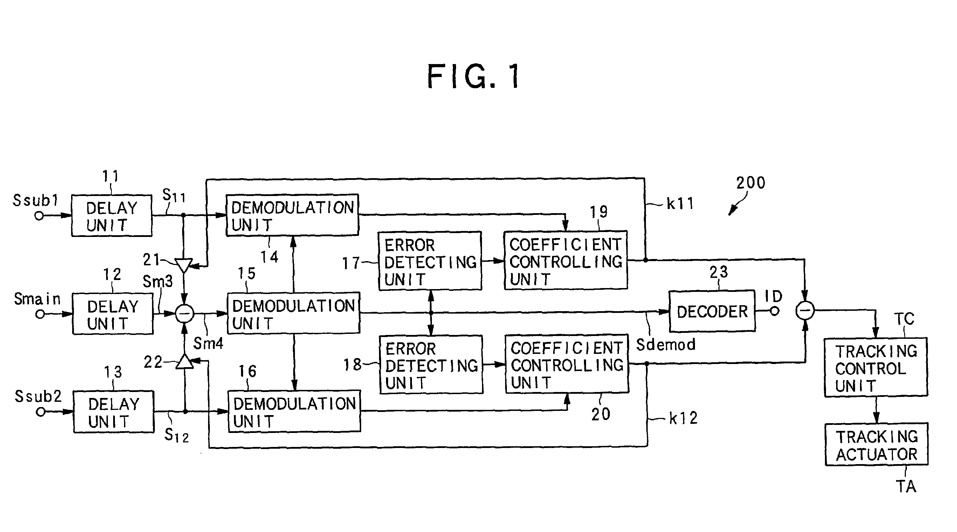

Hereinafter, an information reproduction apparatus according to the present invention will be described, referring to FIGS. 1 to 16.

First, a basic configuration of the information reproduction apparatus according to the present invention will be described here.

FIG. 1 is a view showing a basic configuration of the information reproduction apparatus according to the present invention. A description will be given by way of example when a system of recording binary address information to be associated with a phase of a wobble (for example, 0 degree to 180 degrees) is employed as a system of recording address information by phase modulation.

The information reproduction apparatus shown in FIG. 1 is provided with: delay units 11, 12, and 13 for delaying detected signals Ssub1, Smain, and Ssub2 for a predetermined time; demodulation units 14, 15, and 16 for demodulating wobble signals recorded by phase modulation; error detecting units 17 and 18 for respectively detecting an error included in a demodulation signal Sdemod; and coefficient controlling units 19 and 20 for respectively controlling a crosstalk canceling coefficient according to the information of the error detecting units 17 and 18; a decoder 23 for decoding an output signal of the demodulation unit 15; a tracking control unit TC for performing a tracking control for a pickup; and a tracking actuator TA for driving the pickup. The signals Ssub1, Smain, and Ssub2 are detected by three detectors for respectively reading out wobbles (address information) of three adjacent tracks formed on an optical disc. The error detecting units 17 and 18 may be formed in one shared detecting unit.

The delay units 11, 12, and 13 are used for canceling the relative positional relation of optical spots of the detectors for reading the wobbles of the three tracks. In the case of radiating three beams on mutually adjacent tracks, the optical spots are disposed at each position deviated from each other in the circumferential direction of the optical disc. The delay units 11 to 13 adjust delays of the detected signals Ssub1, Smain, and Ssub2 so as to cancel the positional deviations of the optical spots in the circumferential direction of the optical disc. Thus, signals S₁₁, Sm3, and S₁₂ supplied from the delay units 11 to 13 correspond to the detected signals in the case of equally aligning three optical spots in a radius direction of the optical disc.

The error detecting unit 17 detects an error ΔS between an ideal address demodulation signal and the address demodulation signal Sdemod actually supplied from the demodulation unit 15 and supplies it to the coefficient controlling units 19. The coefficient controlling unit 19 detects correlation between the error ΔS and the signal S₁₁ and supplies a coefficient k11 corresponding to the correlation, to a multiplier 21, where the coefficient k11 is multiplied by the signal S₁₁. On the other hand, the coefficient controlling unit 20 detects correlation between the error ΔS and the signal S₁₂ and supplies a coefficient k12 corresponding to the correlation, to a multiplier 22, where the coefficient k12 is multiplied by the signal S₁₂.

As illustrated in FIG. 1, the output values of the multiplier 21 and the multiplier 22 are subtracted from the signal Sm3 supplied from the delay unit 12, hence to get a signal Sm4. Further, the signal Sm4 is demodulated by the demodulation unit 15 and the address demodulation signal Sdemod is supplied.

According to a feedback control by the above two loops, the coefficients of the multipliers 21 and 22 are controlled so as to get the minimum ΔS, in other words, so as to get the minimum crosstalk from the both adjacent tracks in the address demodulation signal Sdemod. Thus, the crosstalk from the both adjacent tracks in the address demodulation signal Sdemod is canceled.

The address demodulation signal Sdemod having the crosstalk canceled is entered to the demodulator 23, hence to reproduce the address information.

In this way, in the structure of FIG. 1, the crosstalk with respect to the detected signal before demodulation is canceled, and the address demodulation signal is obtained by demodulating the detected signal after cancellation of the crosstalk.

As shown in FIG. 1, a difference between a coefficient k11 outputted from a coefficient control unit 19 and a coefficient k12 outputted from a coefficient control unit 20 is outputted to a tracking control unit TC. The tracking control unit TC controls a tracking actuator TA according to a value of the difference between the coefficient k11 and coefficient k12. Specifically, the tracking control unit TC controls the tracking actuator TA so that the difference between the coefficient k11 and the coefficient k12 is 0.

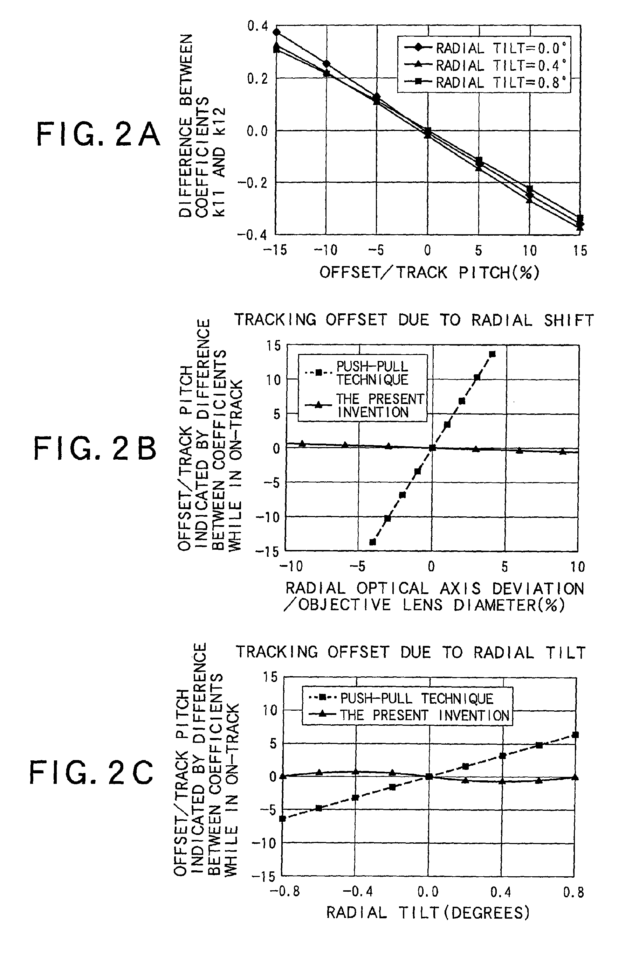

FIG. 2A shows a difference between a coefficient k11 and a coefficient k12 relevant to de-tracking (a difference between left and right tap coefficients). In FIG. 2A, the vertical axis indicates the difference between the coefficient k11 and the coefficient k12, and the horizontal axis indicates a rate of de-tracking to a tracking pitch. In FIG. 2A, there is shown a case in which a radial tilt = 0.0 degree, 0.4 degree, and 0.8 degree relevant to a case in which the number of apertures NA = 0.6, a wavelength λ = 650 nm, a tracking pitch = 683 nm, and a groove width = 341.5 nm, respectively.

As shown in FIG. 2A, a de-tracking rate and a difference between the coefficient K11 and the coefficient k12 is in a substantially proportional relationship relevant to each radial tilt. In addition, when de-tracking is 0, the difference between the coefficient k11 and the coefficient k12 is always taken as a value close to 0, hardly affected by the radial tilt.

FIG. 2B shows a relationship between an offset rate (a target value offset) indicating a difference between the coefficient k11 and the coefficient k12 while in on-track and a radial shift (optical axis displacement) of an optical disk relevant to a case in which the number of apertures NA = 0.6, the wavelength λ = 650 nm, and the track pitch = 683 nm, and the groove width = 341.5 mm as simulation parameters. In FIG. 2B, the vertical axis indicates a rate of an offset indicated as the difference between the coefficient k11 and the coefficient k12 while in on-track to a track pitch, and the horizontal axis indicates a rate of a radial lens shift to a beam diameter. A case in which a conventional push-pull method is employed is indicated by dotted line.

As shown in FIG. 2B, the difference between the coefficient k11 and the coefficient k12 while in on-track is always taken as a value close to 0, hardly affected by a radial lens shift.

FIG. 2C shows a relationship between a target value offset and a radial tilt. Simulation parameters are similar to those of FIG. 2B. A case in which a conventional push-pull method is indicated by dotted line. As shown in FIG. 2C, in this case as well, an offset is always taken as a value close to 0, hardly affected by a radial tilt.

As described above, the tracking actuator TA is controlled so that the difference between the coefficient k11 and the coefficient k12 is 0, whereby precise tracking control can be executed, hardly affected by a radial shift.

However, the above result is obtained, since a track pitch as described later is selected. In general, the difference between the coefficient k11 and the coefficient k12 changes depending on a radial tilt.

In the case where the difference between the coefficient k11 and the coefficient k12, i.e., the difference between the left and right tap coefficients is employed as a tracking target value signal, if an offset occurs due to a radial tilt of an optical disk, tracking cannot be obtained as a correct target value.

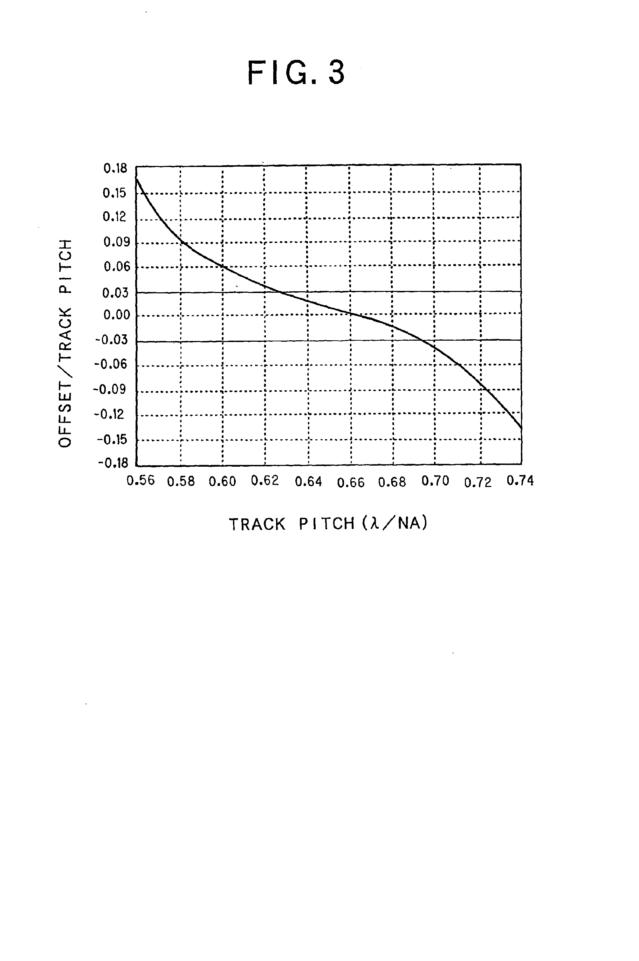

FIG. 3 is a view showing a result obtained by performing simulation as to how much the tracking target value shifts in the case where the radial tilt is 1 degree. In FIG. 3, the vertical axis indicates a rate of a tracking offset to a track pitch, and specifically, the horizontal axis indicates a value obtained by normalizing a track pitch by λ /NA.

As shown in FIG. 3, when a value obtained by normalizing the track pitch by λ /NA is approximately 0.66, an offset due to a tilt hardly occurs. However, it is found that a tracking offset increases even if the offset is too narrow or too wide when the track pitch is defined as a boundary.

For example, in a standard reproduction apparatus defined in DVD-ROM specifications, a maximum value of the remaining error of a tracking servo is defined as 0.022 µm, which is equivalent to about 3% of the tracking pitch (=0.022/0.74 x 100).

In an actual drive as well, it is considered that the tracking offset is required to be suppressed to this extent. Thus, as is evident from FIG. 3, it is found that a value obtained by normalizing the track pitch by λ /NA when the offset is between -3% and 3% must be 0.625 to 0.690.

Therefore, in an optical recording medium meeting the above condition, tracking can be precisely achieved.

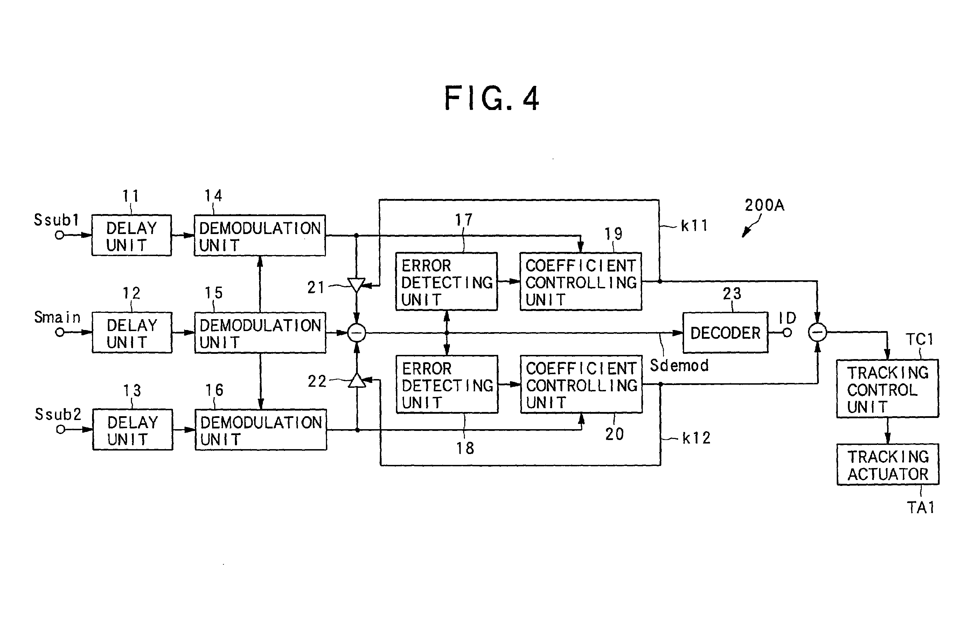

In a configuration shown in FIG. 4, there is shown a case in which cross talk offset is executed for a detection signal after demodulation. In FIG. 4, the same constituent elements shown in FIG. 1 are designated by the same reference numerals.

As shown in FIG. 4, in this apparatus 200A, a signal after demodulation, which is an output signal of a demodulation unit 14 and a demodulation unit 16 each is subtracted from an output signal of a demodulation unit 15, i.e., a signal after demodulation, thereby canceling a cross talk. In this configuration as well, under the feedback control by two loops including multipliers 21 and 22, respectively, coefficients of the multipliers 21 and 22 are controlled so that a correlation value computed in the coefficient control unit 19 and the coefficient control unit 20 is minimal, i.e., so that a cross talk from the adjacent tracks relevant to an address demodulation signal Sdemod is minimal. In this manner, the cross talk from the adjacent tracks relevant to the address demodulation signal Sdemod is eliminated. Functions of delay units 11 to 13 are similar to a case of a configuration shown in FIG. 1.

As shown in FIG. 4, the apparatus 200A is provided with: a tracking control part TC1 for executing tracking control of a pickup; and a tracking actuator TA1 for driving the pickup.

As shown in FIG. 4, a difference between the coefficient k11 outputted from the coefficient control part 19 and the coefficient k12 outputted from the coefficient control part 20 is inputted to the tracking control part TC1. The tracking control unit TC1 controls the tracking actuator TA1 according to a value of the difference between the coefficient k11 and the coefficient k12. Specifically, the tracking control part TC1 controls the tracking actuator TA1 so that the difference between the coefficient k11 and the coefficient k12 is 0. In this manner, precise tracking control can be achieved, hardly affected by a radial tilt and a radial lens shift.

The information reproduction apparatus 200A extracts a cross talk from a signal after demodulation. The waveform of a wobble signal that is a signal before demodulation is a sine wave, and it is difficult to detect an error (a cross talk quantity) from such an analog-like signal waveform. In addition, a random noise is added to an actual signal before demodulation, which is very noisy. This eventually makes it impossible to detect an error. In contrast, a signal after demodulation is a digitally oriented waveform, making it easy to separate a noise (a cross talk). Thus, the information reproduction apparatus 200A can extract a cross talk efficiently.

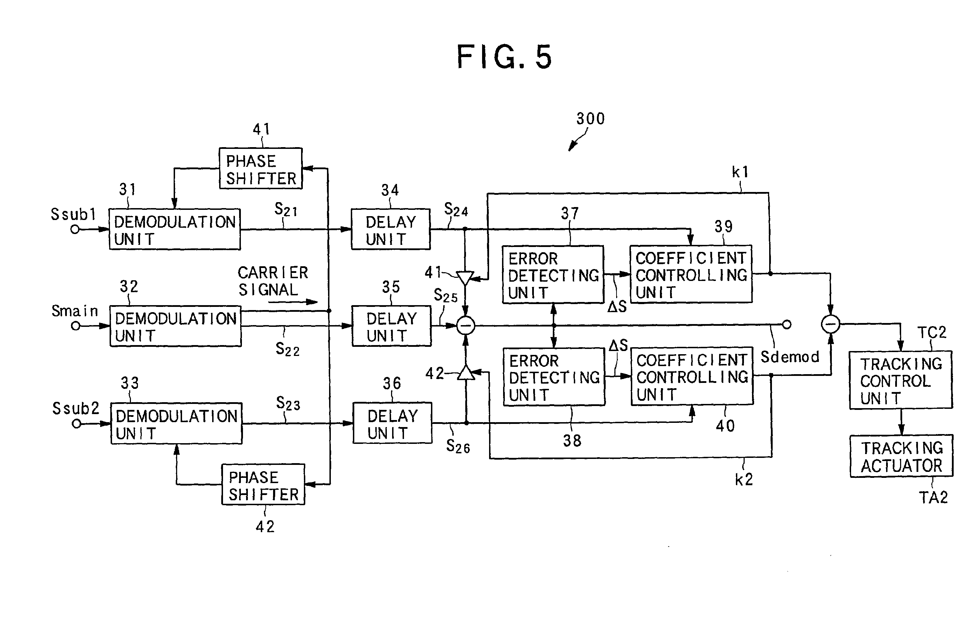

FIG. 5 is a view showing another basic structure of the information reproduction apparatus according to the present invention. The apparatus shown in FIG. 5 corresponds to an optical disc in which tracks are wobbled according to address information by modulating the phase of wobble, similarly to the apparatuses 200, 200A shown in FIGS. 1 and 2.

As illustrated in FIG. 5, the information reproduction apparatus 300 is provided with: demodulation units 31, 32, and 33 for respectively demodulating the detected signals Ssub1, Smain, and Ssub2 from three detectors for respectively reading wobbles (address information) of three tracks adjacent to each other formed on an optical disc; delay units 34, 35, and 36 for delaying the signals S₂₁, S₂₂, and S₂₃, supplied from the demodulation units 31, 32, and 33 respectively, for a predetermined time; error detecting units 37 and 38 for respectively detecting an error included in the demodulation signal Sdemod; and coefficient controlling units 39 and 40 for respectively controlling a crosstalk canceling coefficient according to the information of the error detecting units 37 and 38.

As illustrated in FIG. 5, a carrier signal is supplied to the demodulation unit 31 through a phase shifter 41. A carrier signal is also supplied to the demodulation unit 33 through a phase shifter 42.

As illustrated in FIG. 5, the detected signals Ssub1, Smain, and Ssub2 from the detectors are respectively supplied to the demodulation units 31, 32, and 33, without adjustment of each delay. Therefore, the information playback apparatus shown in FIG. 5 is designed so that it can change the phases of carrier signals given to the demodulation units 31, 32, and 33, in accordance with the various phases of the detected signals Ssub1, Smain, and Ssub2 depending on the positions of optical spots of the respective detectors. The delay units 34, 35, and 36 cancel the relative positional relation of the optical spots of the detectors. This structure can decrease an error of an optical spot, and when an error is small enough to be neglected as a demodulated address signal, the delay units 34, 35, and 36 can be omitted.

The error detecting unit 37 detects an error ΔS between an ideal address demodulation signal Sdemod and the address demodulation signal Sdemod actually supplied and supplies it to the coefficient controlling unit 39. The coefficient controlling unit 39 detects correlation between the error ΔS and the output signal S₂₄ of the delay unit 34 and supplies the coefficient k1 corresponding to the correlation, to a multiplier 41, where the coefficient k1 is multiplied by the output signal S₂₄ of the delay unit 34.

The error detecting unit 38 detects an error ΔS between an ideal address demodulation signal and the address demodulation signal Sdemod actually supplied and supplies it to the coefficient controlling unit 40. The error detecting unit 37 and the error detecting unit 38 are completely identical, and generally they are used in common. The coefficient controlling unit 40 detects correlation between the error ΔS and the output signal S₂₆ of the delay unit 36 and supplies the coefficient k2 corresponding to the correlation, to a multiplier 42, where the coefficient k2 is multiplied by the output signal S₂₆ of the delay unit 36.

As illustrated in FIG. 5, the output values of the multiplier 41 and the multiplier 42 are subtracted from the signal S₂₅ supplied from the delay unit 35, thereby generating the address demodulation signal Sdemod.

According to a feedback control by the above two loops, the coefficients of the multiplier 41 and the multiplier 42 are controlled so as to get the minimum correlation that is calculated by the coefficient controlling units 39 and 40, in other words, so as to get the minimum crosstalk from the both adjacent tracks in the address demodulation signal Sdemod. Thus, the crosstalk from the both adjacent tracks in the address demodulation signal Sdemod is canceled.

The address demodulation signal Sdemod in which the crosstalk is canceled is supplied to a demodulator (not illustrated), thereby generating the address information.

As shown in FIG 5, the apparatus 300 is provided with: the tracking control unit TC2 for executing tracking control of the pickup; and the tracking actuator TA2 for driving the pickup.

As shown in FIG. 5, the difference between the coefficient k1 outputted from the coefficient control unit 39 and the coefficient k2 outputted from the coefficient control unit 40 is inputted to the tracking control unit TC2. The tracking control unit TC2 controls the tracking actuator TA2 according to a value of the difference between the coefficient k1 and the coefficient k2. Specifically, this control unit controls the tracking actuator TA2 so that the difference between the coefficient k1 and the coefficient k2 is 0. In this manner, precise tracking control can be achieved, hardly affected by a radial tilt and a radial lens shift.

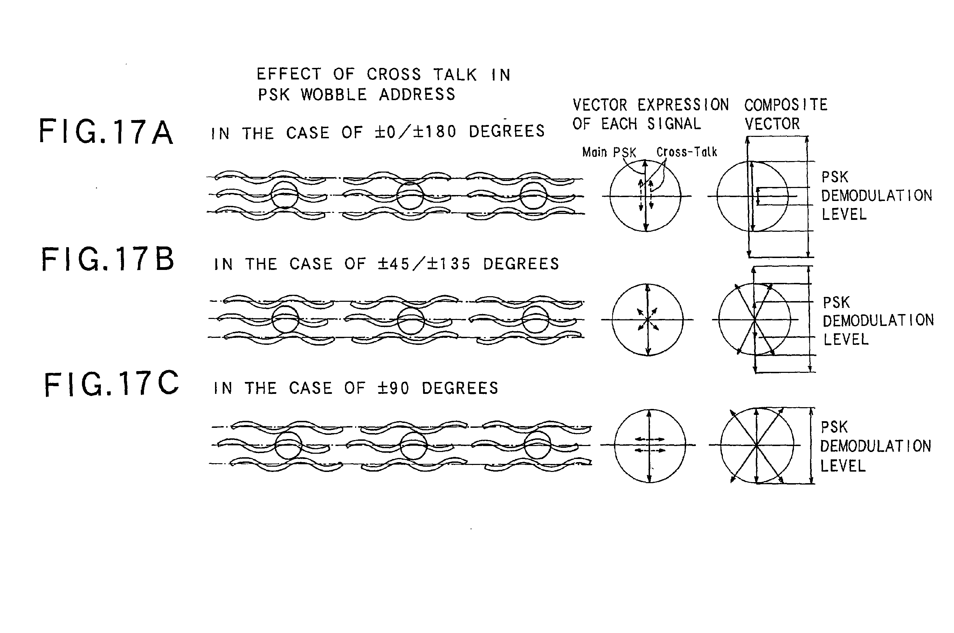

FIG. 17 is a view showing an effect of a cross talk when phase relationships in wobble signals between the adjacent tracks are different from each other. FIG. 17 assumes a model in which a wobble signal of the adjacent tracks is subtracted from or added to a linear.

In general, a wobble signal is recorded at a CLV (at a constant line velocity). Thus, the wobble signal of the adjacent track is in a specific phase relationship relevant to a wobble signal of a track being reproduced, and a variety of phase relationships can be established. FIGS. 17A to 17C show cases in which the phases of wobble signals (that is, cross talks) of the adjacent tracks are ±0 degree/± 180 degrees, ±45 degrees/±135 degrees, and ±90 degrees relevant to the phases of a wobble signal of the track being reproduced. FIGS. 17A to 17C show a track disposition relationship and a vector expression of the wobble signal of the track being reproduced and the wobble signal of the adjacent track after subtracted (i.e., cross talk). The respective figures show vectors obtained by composing vectors together.

When the composed vectors (i.e., wobble signals including cross talks) is PSK modulated, the amplitude obtained by projecting the composed vectors on "y" axis (vertical axis) is obtained as a demodulation signal.

In this manner, the cross talk of the wobble signal appears or does not appear at a signal level after PSK demodulation according to a phase relationship in wobble signal between a main track (track being reproduced) and the adjacent track. Therefore, in the case where the cross talk offset coefficient is controlled by a signal after PSK demodulation, a cross talk quantity is reflected or is not reflected on a cross talk offset coefficient dependent on a phase relationship of a wobble signal. This makes it impossible to acquire correct tracking information.

In order to monitor a precise cross talk quantity independent of a phase relationship of a wobble signal, demodulation is performed by employing two carrier signals with their different phases from each other, and the respective correlation is vector-composed, thereby making it necessary to control a cross talk offset coefficient.

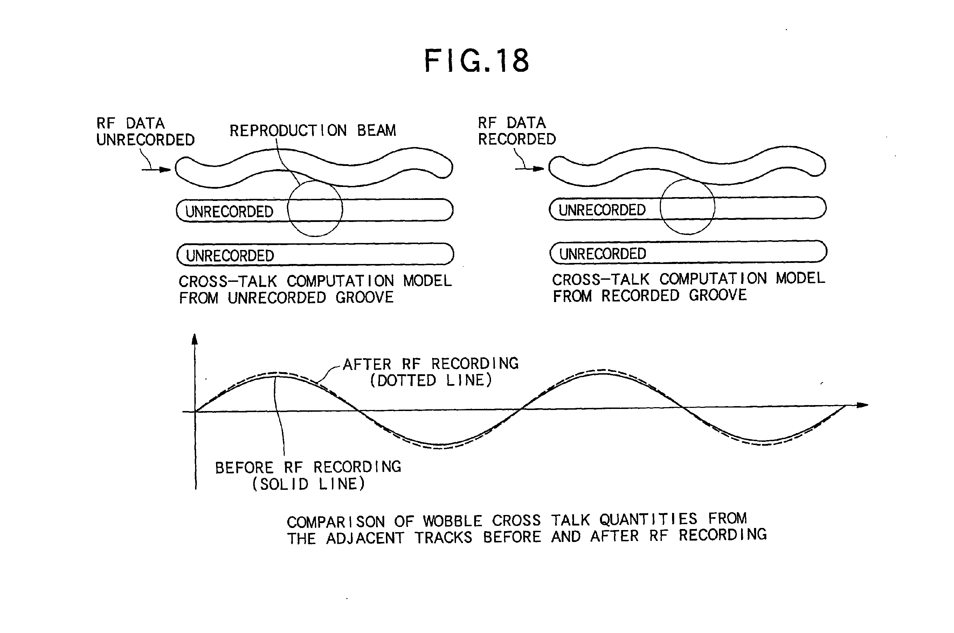

In the case where a target value signal of tracking is obtained based on a difference between cross talk offset coefficients which change according to a cross talk balance, the RF recording states of the left and right adjacent tracks are different from each other, and an offset occurs with the target value signal of tracking. The outlook will be described by employing a simulation model shown in FIG. 18.

FIG. 18 shows a result of computing how large the wobble cross talk changes according to a case in which RF data is unrecorded in a groove of the adjacent tracks and in a case in which the RF is recorded therein. A cross talk from the adjacent tracks being wobbled is reflected on a push-pull signal when the main track is reproduced. In FIG. 18, the push-pull signal waveform indicated by the dotted line shows a case in which RF data is unrecorded in the adjacent tracks and a case in which RF data is recorded in the adjacent tracks, respectively. It is found that the cross talk with the push-pull signal of the main track hardly changes irrespective of a case in which RF data is unrecorded in the adjacent tracks and a case in which the RF data is recorded therein.

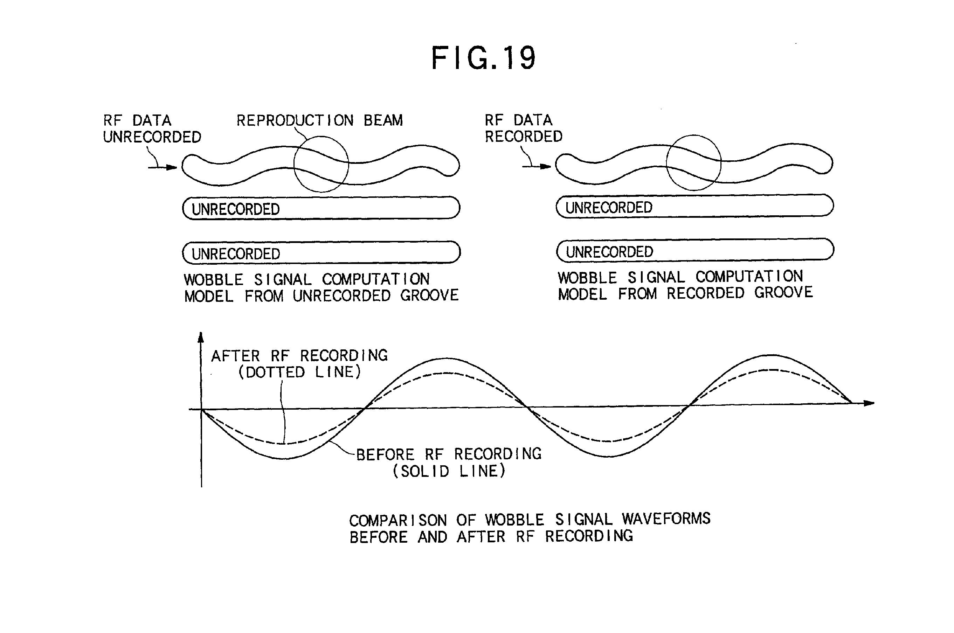

On the other hand, FIG. 19 shows a wobble signal when reproduction is performed on a groove in which RF data is unrecorded; and a wobble signal when reproduction is performed on a groove in which RF data is recorded, respectively. In FIG. 19, the solid line indicates a wobble signal waveform when RF data is unrecorded, and the dotted line indicates a wobble signal waveform when the adjacent RF data is recorded, respectively. In these cases, it is found that signal levels of the wobble signals are remarkably different from each other depending on a case in which RF data is unrecorded and a case in which the RF data is recorded.

Employing a correlation between a cross talk quantity and a wobble signal level controls the cross talk offset coefficient. Thus, if a wobble signal level of the adjacent tracks changes irrespective of no change in cross talk quantity, a cross talk offset coefficient changes according to a wobble signal level of the adjacent tracks.

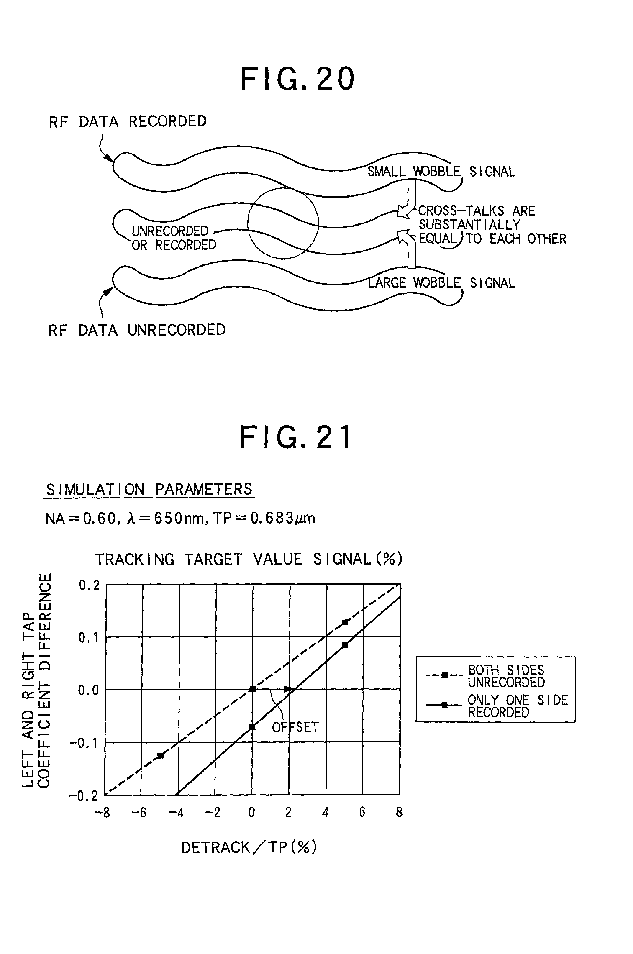

FIG. 20 shows a case in which RF data is unrecorded in one of the tracks, and RF data is recorded in the other track. In addition, FIG. 21 shows a simulation result of an offset of a target value signal of tracking in the case of FIG. 20. As simulation parameters in FIG. 21, the number of apertures NA = 0.6, the wavelength λ = 650 nm, and the track pitch = 683 nm.

As shown in FIG. 21, in comparison with a case in which RF data is unrecorded in the adjacent racks (indicated by the dotted line), even if reproduction beams are on track, the left and right cross talk coefficients are different from each other in the case of FIG. 20 (indicated by the solid line), and an offset occurs with the target value signal of tracking. As a result, tracking is generated at a position shifted from on-track.

As shown above, in order to monitor a precise cross talk quantity irrespective of a phase relationship between the wobble signals, it is required to perform demodulation by employing two carrier signals with their different phases from each other. In addition, in order to execute correct tracking, it is required to eliminate an effect of RF data recorded in the adjacent tracks.

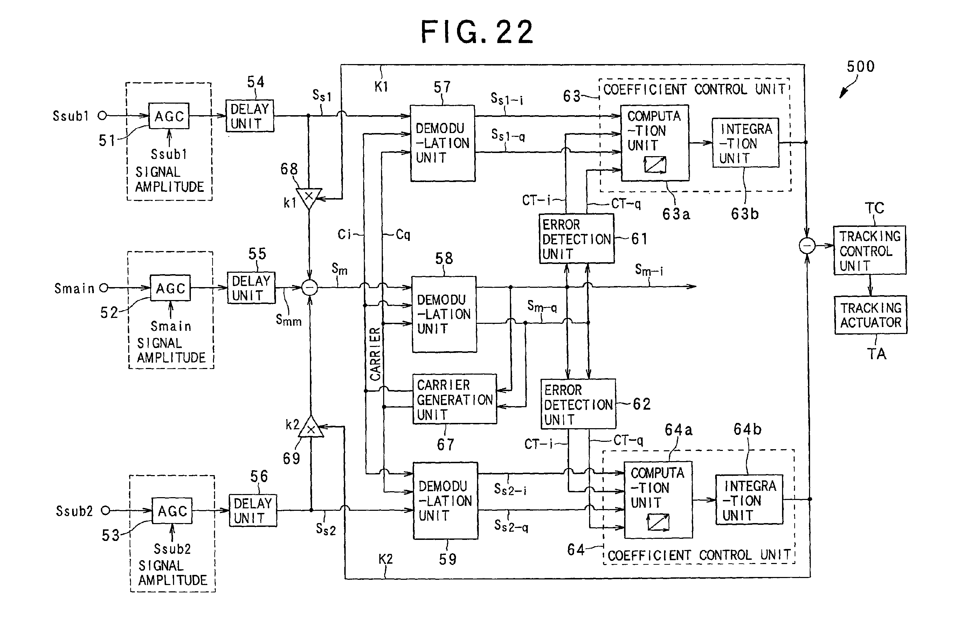

FIG. 22 is a view showing an exemplary configuration of an information reproduction apparatus capable of solving the foregoing problems. An information reproduction apparatus 500 shown in FIG. 22 is provided with: AGC (Auto Gain Control) circuits 51, 52, and 53 for respectively trimming signal levels of detection signals Ssub1, Smain, and Ssub2 from three detectors for respectively reading wobbles (address information) of the three adjacent three tracks formed in an optical disk; delay units 54, 55, and 56 composed of FIFO (First In First Out) circuits for delaying output signals of the AGC circuits 51, 52, and 53 respectively by a predetermined time; demodulation units 57, 58, and 59 for demodulating wobble signals recorded by phase modulation; error detection units 61 and 62 for detecting errors included in the demodulation signal Sdemod outputted from the demodulation unit 58; coefficient control units 63 and 64 for control cross talk offset coefficients respectively in accordance with information of the error detection units 61 and 62; a tracking control unit TC for executing pickup tracking control; and a tracking actuator TA for driving a pickup. The error detection units 61 and 62 may be shared as one detection part.

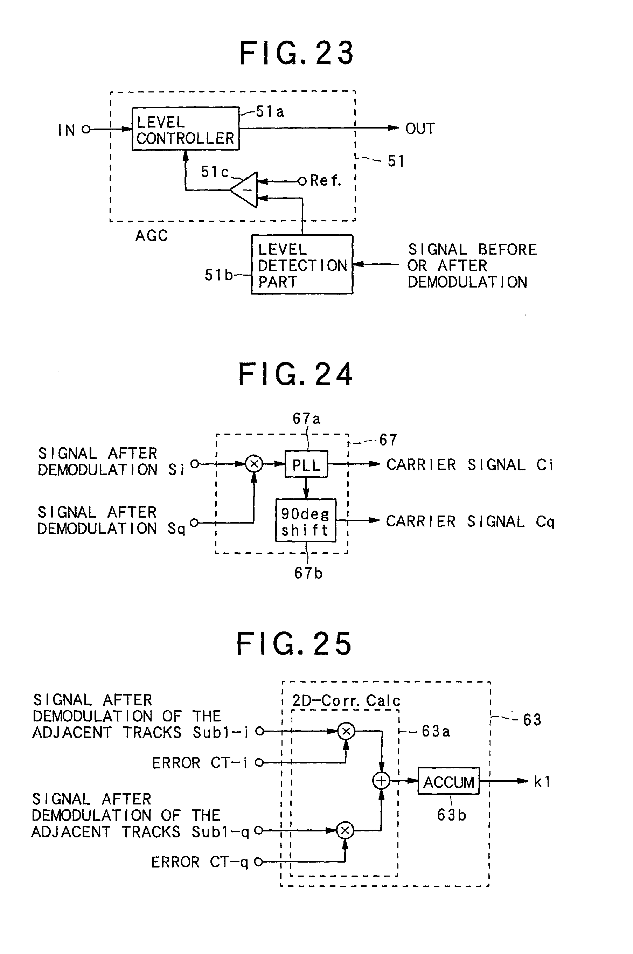

As shown in FIG. 23, an AGC circuit 51 is provided with; a level controller 51a and a comparator 51c for comparing an output signal of a level detection unit 51b for detecting and outputting an amplitude level of an inputted signal with a reference signal. In response to a comparison result between an output signal of the level detection unit 51b and a reference signal Ref, the degree of amplification of the level controller 51a is controlled so that the amplitude of the output signal of the comparator 51c is constant. In addition, the AGC circuit 52 and the AGC circuit 53 are configured as in the AGC circuit 51 shown in FIG. 23, respectively.

As shown in FIGS. 22 and 24, the information reproduction apparatus 500 is provided with a carrier generation unit 67 for generating two carrier signals with their different phases from each other by 90 degrees. The carrier generation unit 67 generates a multiplication signal of two signals after modulated by the carrier signals with their different phases from each other by 90 degrees, and inputs the multiplication signal to a PLL (Phase Lock Loop) circuit 67a, thereby generating a carrier signal Ci. In addition, the phase of the carrier signal Ci is shifted by 90 degrees by means of a phase shift circuit 67b, thereby generating a carrier signal Cq. The two carrier signals Ci and Cq outputted from the carrier generation unit 67 are imparted to the demodulation units 57, 58, and 59, respectively.

The AGC circuits 51, 52, and 53 make constant the wobble signal amplitudes of the detection signals Ssub1, Smain, and Ssub2, thereby making it possible to prevent an offset from occurring with the target value signal of tracking according to whether or not RF data is recorded in a track as described above. In the information reproduction apparatus 500, the amplitude of the wobble signal is constantly controlled under feedback control.

Delay units 54, 55, and 56 are provided to cancel a relative positional relationship of a light spot of the detector for reading wobbling of three tracks. In this manner, a signal outputted from the delay units 54 to 56 each is equivalent to a detection signal when three light spots are equivalently arranged in the radial direction of an optical disk. The delay unit 54 outputs a signal Ss1, the delay unit 55 outputs a signal Smm, and the delay unit 56 outputs a signal Ss2, respectively.

The demodulation unit 57 demodulates the signal Ss1 by means of the carrier signal Ci, and outputs a signal Ss1-i; and demodulates the signal Ss1 by means of the carrier signal Cq, and outputs a signal Ss1-q.

The demodulation unit 58 demodulates the signal Sm by means of the carrier signal Ci, and outputs an address demodulation signal Sm-i; and demodulates the signal Sm by means of the carrier signal Cq, and outputs a signal Sm-q. From the signal Smm, predetermined signals outputted from multipliers 68 and 69 are subtracted from each other, and a signal Sm is obtained.

The demodulation unit 59 demodulates the signal Ss2 by means of the carrier signal Ci, and outputs a signal Ss2-i; and modulates the signal Ss2 by means of the carrier signal Cq, and outputs a signal Ss2-q.

The error detection unit 61 detects the error CT-i and the error CT-q respectively relevant to an ideal signal of the address demodulation signal Sm-i and the signal Sm-q, and outputs them to the coefficient control unit 63. The error detection unit 62 detects the error CT-i and the error CT-q respectively relevant to an ideal signal of the address demodulation signal Sm-i and the signal Sm-q, and outputs them to the coefficient control unit 64.

As shown in FIGS. 22 and 25, a computation unit 63a of the coefficient control unit 63 multiplies the signals Ss1-i and Ct-i, and multiplies the signals Ss1-q and CT-q. The computation unit 63a of the coefficient control unit 63 adds two multiplication signals generated to be multiplied as described above, and further, an integration unit 63b of the coefficient control unit 63 integrates the added signals with each other, thereby obtaining the coefficient k1. The coefficient k1 corresponds to a length of a vector by vector-composing signals detected in a vector direction orthogonal to each other.

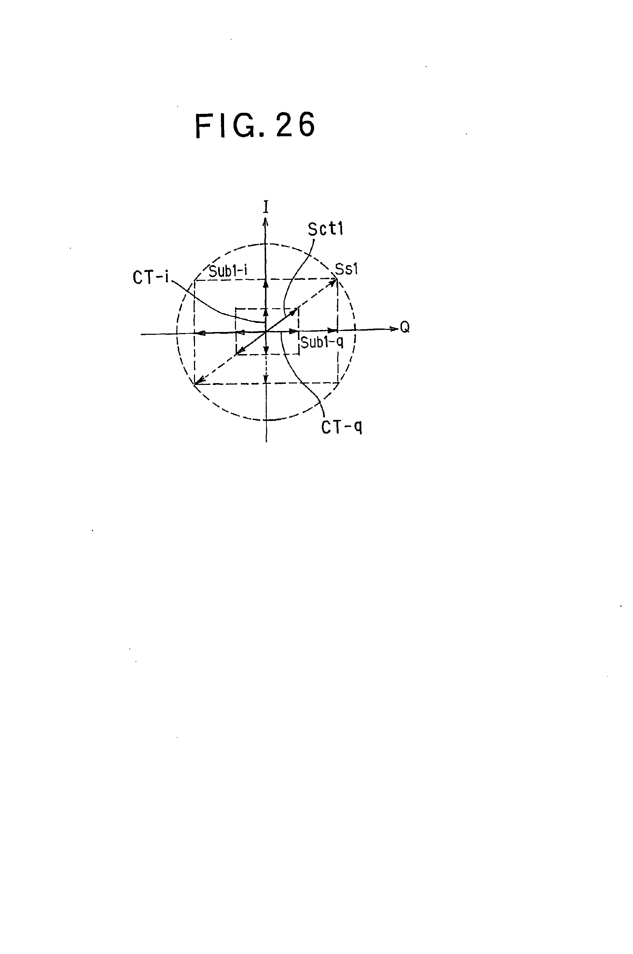

FIG. 26 is a view showing an image of a correlation detection vector in a two-dimensional manner at the coefficient control unit 63. As shown in FIG. 26, the coefficient control unit 63 detects a correlation between an error and a signal of the adjacent tracks relevant to two vector directions orthogonal to each other. Thus, it is possible to always precisely detect a correlation irrespective of a phase relationship between a wobble signal of a track being reproduced and a wobble signal of the adjacent tracks (i.e., a cross talk). In FIG. 26, the signal Ss1 projected on the vertical axis (I axis) is a signal Sub1-i, and the signal Ss1 projected on the horizontal axis (Q axis) is a signal Sub1-q. In addition, a signal Sct1 projected on the vertical axis is a signal CT1-i, and the signal Sct1 projected on the horizontal axis is a signal CT1-q.

On the other hand, a computation part 64a of a coefficient control unit 64 multiplies the signals Ss2-i and CT-i with each other, and multiplies the signals Ss2-q and CT-q with each other. The computation unit 64a of the coefficient control unit 64 adds two multiplication signals generated to be multiplied as described above, and further, an integration unit 64b of the coefficient control unit 64 integrates the added signals with each other, thereby obtaining the coefficient k2. In this manner, as in the coefficient control unit 63, correlation detection in a two-dimensional manner is executed.

As shown in FIG. 22, the coefficient k1 is imparted to a multiplier 68, and a product between the coefficient k1 and the signal Ss1 is subtracted from the signal Smm. In addition, the coefficient k2 is imparted to a multiplier 69, and a product between the signal Smm and the coefficient k2 is subtracted. In this manner, a signal Sm is generated.

Under such feedback control caused by two loops, the coefficients k1 and k2 are controlled so that a cross talk from the adjacent tracks is minimal. In this manner, a cross talk from the adjacent tracks relevant to the address demodulation signal Sm-i is eliminated. In the information reproduction apparatus 500, subtraction by the multipliers 68 and 69 is performed for a signal before demodulation, and a cross talk is canceled for the signal before demodulation.

On the other hand, a difference between the coefficients k1 and k2 is imparted to the tracking control unit TC, and the tracking actuator TA is controlled by means of the tracking control unit TC. As described above, the information reproduction apparatus 500 detects a correlation between an error and a signal of the adjacent tracks relevant to two vector directions orthogonal to each other, thus making it possible to always precisely detect a correlation irrespective of a phase relationship between a wobble signal of a track being reproduced and a wobble signal of the adjacent tracks (i.e., a cross talk). Therefore, precise tracking control can always be executed.

The information reproduction apparatus 500 extracts a cross talk from a signal after demodulation. The waveform of a wobble signal that is a signal before demodulation is a sine wave, and it is difficult to detect an error (cross talk quantity) from such an analog-like signal waveform. In addition, a random noise is added to an actual signal before demodulation, which is very noisy. This makes it impossible to eventually detect an error. In contrast, a signal after demodulation is a digital waveform, making it easy to separate a noise (cross talk). Thus, the information reproduction apparatus 500 can extract a cross talk efficiently.

As in the information reproduction apparatus 500, in the case where the degree of amplification of an AGC circuit is controlled under feedback control, the AGC circuit may be provided anywhere and the signal amplitude may be detected anywhere as far as the position may be in front of the coefficient control unit. That is, these positions may be before and after the demodulation unit. However, in the case where amplitude detection is performed after demodulation in a phase modulation system, in order to ensure a correct cross talk offset operation irrespective of a wobble phase relationship, for example, it is required to employ a vector composition amplitude of two amplitudes divided by an orthogonal vector.

Signals indicative of amplitudes of signals Ssub1, Smain, Ssub2 respectively are inputted to the AGC circuits 51 to 53. However, as such signals, signals obtained after the signals Ssub1, Smain, and Ssub2 are modulated respectively may be inputted thereto. In this case, a noise component in signal can be reduced in comparison with a case or the like in which the signals Ssub1, Smain, and Ssub2 before demodulation are directly inputted, for example. Thus, there is an advantage that the AGC circuits 51 to 53 can be operated precisely.

Although the information reproduction apparatus 500 controls the degree of amplification of the ACG circuit under feedback control, feed forward control may be employed.

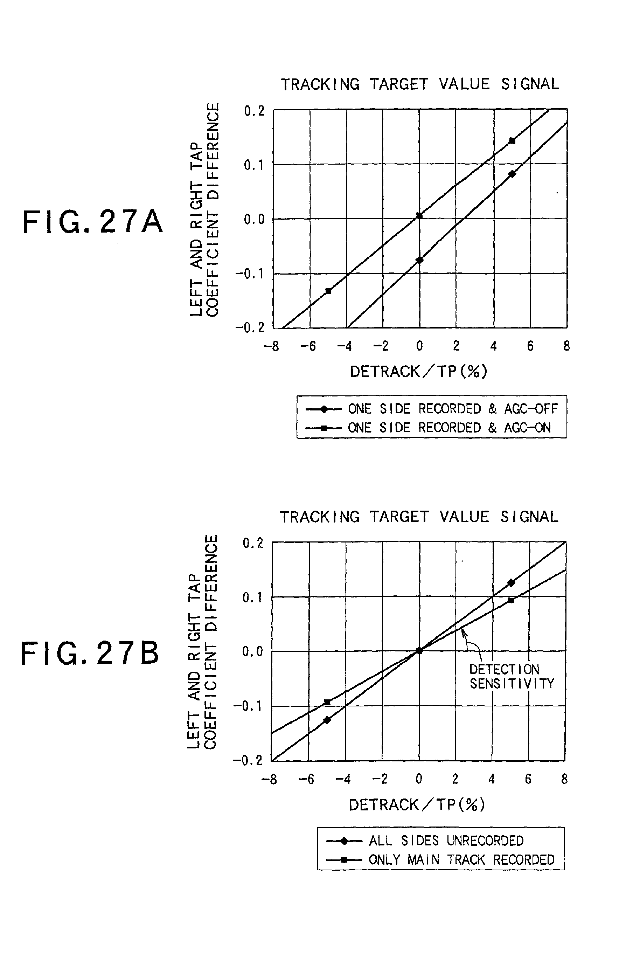

In the information reproduction apparatus 500, the wobble signal amplitude of each track is made constant by the AGC circuit, thus making it possible to prevent an offset of the target value signal of tracking as shown in FIG. 21. FIG. 27A is a view showing a simulation result of the presence or absence of the AGC circuits 51 to 53 in the case where RF data is recorded in only one of the adjacent tracks. In FIG. 27A, the vertical axis indicates a difference between the coefficients, and the horizontal axis indicates a de-tracking quantity of reproduction beams, respectively. The simulation parameters are identical to those of FIG. 21. As shown in FIG. 27A, the AGC circuits are provided, whereby an offset of the target value signal of tracking is eliminated.

In addition, in the information reproduction apparatus 500, the level of the signal Smain is adjusted by means of the AGC circuit 52. Even if level adjustment of the main track signal is eliminated, an offset does not occur with the target value signal of tracking by level adjustment of the signal of the adjacent track. However, in this case, the de-tracking detection sensitivity is changed when the reproduction beams deviate from on-track.

FIG. 27B shows a simulation result of a difference in coefficients (a value corresponding to a difference between the coefficients k1 and k2) in the case where level adjustment of the main track signal is eliminated. In FIG. 27B, the vertical axis indicates a difference between coefficients, and the horizontal axis indicates a de-tracking quantity of reproduction beams, respectively. FIG. 27B shows a case in which RF data is unrecorded in the main track and the adjacent track of the main track; and a case in which RF data is unrecorded in the adjacent tracks of the main track. As shown in FIG. 27B, if RF data is recorded in the main track, it is shown that the gradient of a graph is small, and the de-tracking detection sensitivity is lowered. In the above information reproduction apparatus 500, the level of the main track signal, i.e., signal Smain, is adjusted, and thus, such a change in de-tracking detection sensitivity does not occur.

In the information reproduction apparatus 500, although one of the carrier signals employed for cross talk extraction is compatible with that employed for data demodulation, cross talk extraction and data demodulation may be executed by employing a completely separate carrier signal. In addition, in the information reproduction apparatus 500, although a phase difference between the two carrier signals for cross talk extraction is set to 90 degrees, the phase difference may be at any angle other than 0 degree (and 180 degrees). In addition, the same carrier signal may not be employed in order to demodulate signals of the adjacent tracks (signals Ssub1 and Ssub2).

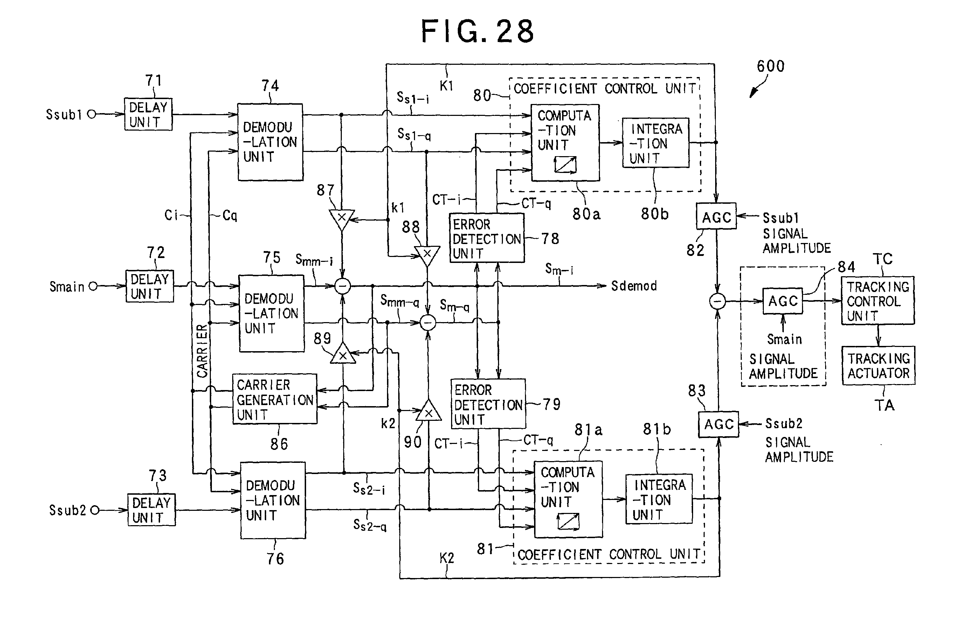

FIG. 28 is a view showing another exemplary configuration of an information reproduction apparatus. An information reproduction apparatus 600 shown in FIG. 28 is provided with: delay units 71, 72, and 73 consisting of FIFO (First In First Out) circuits for delaying detection signals Ssub1, Smain, and Ssub 2 respectively from three detectors for reading wobbling (address information) of the mutually adjacent three tracks respectively formed in an optical disk; demodulation units 74, 775, and 76 for demodulating a wobble signal recorded by phase modulation; error detection units 78 and 79 for detecting an error included in a demodulation signal Sdemod; coefficient control units 80 and 81 for controlling cross talk offset coefficients respectively in accordance with information of the error detection units 78 and 79; an AGC (Auto Gain Control) circuit for amplifying the coefficient k1 outputted from the coefficient control unit 80 at the degree of amplification according to the signal amplitude of the signal Ssub1; an AGC circuit 83 for amplifying the coefficient k2 outputted from the coefficient control unit 81 at the degree of amplification according to the signal amplitude of the signal Ssub2; an AGC circuit 84 in which the degree of amplification is controlled according to the signal amplitude of the signal Smain; a tracking control unit TC for executing tracking control of a pickup; and a tracking actuator TA for driving the pickup. The error detection units 78 and 79 may be shared as one detection unit.

The AGC circuits 82 to 84 are configured as in the AGC circuit 51 shown in FIGS. 22 and 23 each.

As shown in FIG. 28, the information reproduction apparatus 600 is provided with a carrier generation unit 86 for generating two carrier signals Ci and Cq with their different phases from each other. The carrier generation unit 86 is composed as in a carrier generation unit 67 shown in FIG. 24.

The delay units 71, 72, and 73 are provided to cancel a relative positional relationship between light spots of the above detector for reading wobbling of three tracks. In this manner, the signals outputted from the delay units 71 to 73 are equivalent to a detection signal in the case where three light spots are equivalently arranged in the radial direction of an optical disk.

A demodulation unit 74 demodulates an output signal of he delay unit 71 by means of the carrier signal Ci, and outputs the Ss1-i; and demodulates the output signal of the delay unit 71, and outputs the signal Ss1-q.

A demodulation unit 75 demodulates an output signal of he delay unit 71 by means of the carrier signal Ci, and outputs the Smm-i; and demodulates the output signal of the delay unit 71, and outputs the signal Smm-q. From the signal Smm-i, the output signal of a subtractor 87 and the output signal of a subtractor are subtracted, and an address signal Sm-i is generated. In addition, from the signal Smm-q, the output signal of a subtractor 88 and the output signal of a subtractor 90 are subtracted, and a signal Sm-q is generated.

A demodulation unit 76 demodulates the output signal of the delay unit 73 by means of the carrier signal Ci, and outputs a signal Ss2-i; and demodulates the output signal Cq of the delay unit 73, and outputs a signal Ss2-q.

An error detection unit 78 detects and outputs the errors CT-i and CT-q respectively relevant to an ideal signal of the address modulation signal Sm-i and signal Sm-q.

As shown in FIG. 28, a computation unit 80a of a coefficient control unit 80 multiplies signals Ss1-i and CT-i, and multiplies signals Ss1-q and CT-q. The computation unit 80a of the coefficient control unit 80 adds two multiplication signals generated to be multiplied as described above, and further, a integration unit 80b of the coefficient control unit 80 integrates the added signals with each other, thereby obtaining the coefficient k2. In this manner, as in the coefficient control unit 63, correlation detection in a two-dimensional manner is executed.

The coefficient control unit 80 is configured as in the coefficient control unit 63 of the information reproduction apparatus 500. In addition, an operation of the coefficient control unit 80 is similar to that of the coefficient control unit 63, a description of which is omitted here. A configuration shown in FIG. 25 and a method of two-dimensional correlation detection shown in FIG. 26 are applied to the coefficient control unit 80 as well.

As shown in FIG. 28, the coefficient k1 is imparted to multipliers 87 and 88, and a product between the coefficient k1 and signal Ss1-o is subtracted from the signal Sm-i, and a product between the coefficient k1 and signal Ss1-q is subtracted from the signal Sm-q, respectively. In addition, the coefficient k2 is imparted to multipliers 89 and 90, a product between the coefficient k2 and signal Ss2-i is subtracted from the signal Sm-i, and a product between the coefficient k2 and signal Ss2-q is subtracted from the signal Sm-q, respectively. The above product is subtracted from the signal Sm-i, and an address demodulation signal Sm-i is generated.

Under such feedback control caused by two loops, the coefficients k1 and k2 are controlled so that the cross talk from the adjacent tracks is minimal. In this manner, the cross talk from the adjacent tracks relevant to the address demodulation signal Sm-i is eliminated. In the information reproduction apparatus 600, although subtraction is executed for a signal after demodulation by means of the subtractors 87 to 90, thereby canceling the cross talk, the cross talk may be cancelled for a signal before demodulation.

On the other hand, the coefficient k1 is adjusted to a value according to the amplitude of the signal Ssub1 by means of the AGC circuit 82. The coefficient k2 is adjusted to a value according to the amplitude of the signal Ssub1 by means of the AGC circuit 83. A difference between values adjusted by these AGC circuits 82 and 83 is further adjusted to a value according to the amplitude of the signal Smain by means of an AGC circuit 84, and the adjusted value is inputted to the tracking control unit TC. The tracking actuator TA is controlled by means of the tracking control unit TC.

Signals indicative of the amplitudes of the signals Ssub1, Smain, and Ssub2, respectively, are inputted to the AGC circuits 82 to 84. As such signals, signals obtained after the signals Ssub1, Smain, and Ssub2 demodulated respectively may be inputted. In this case, the noise component in signal can be reduced in comparison with a case or the like in which the signals Ssub1, Smain, and Ssub2 before demodulation are directly inputted, for example. Thus, there is an advantage that the AGC circuits 82 to 84 can be operated precisely.

In this manner, in the information reproduction apparatus 600, an operation similar to when the wobble signal amplitude of each track is made constant equivalently is ensured under feed forward control. Therefore, as in the information reproduction apparatus 500, a phenomenon that an offset occurs with the target value signal of tracking can be prevented according to whether or not RF data is recorded in a track. Instead of feed forward control, as in the information reproduction apparatus 500, feedback control may be employed.

In the information reproduction apparatus 600, the wobble signal amplitude of each track is made constant by means of the AGC circuit, thus making it possible to prevent offsetting of the target value signal of tracking as shown in FIG. 21. In addition, in the information reproduction apparatus 600, the level of the signal Smain is substantially adjusted by means of the AGC circuit 84. Even if level adjustment of the main track signal is eliminated, an offset does not occur with the target value signal of tracking by level adjustment of the signal of the adjacent tracks. However, in this case, as shown in FIG. 27, the de-tracking detection sensitivity changed when the reproduction beams deviate from an on-track.

The information reproduction apparatus 600 extracts a cross talk from a signal after demodulation as in the information reproduction apparatus 500. Thus, as described above, it is comparatively easy to separate a noise (a cross talk), and the cross talk can be extracted efficiently.

In the information production apparatus 600, although one of the carrier signals employed for cross talk extraction is compatible with a carrier signal for data demodulation, cross talk extraction and data demodulation may be executed by employing completely separate carrier signal. In addition, in the information reproduction apparatus 600, although a phase difference between two carrier signals for cross talk extraction is set to 90 degrees, the phase difference may be an angle other than 0 degree (and 180 degrees). In addition, the same carrier signal may not be employed for demodulating a signal of the adjacent tracks (signals Ssub1 and Ssub2).

The order of the delay part and demodulation part is not limited to the present invention in particular. Furthermore, as a system of recording address information of an optical disk by means of wobbling, there is proposed: a system of recording wobbling FM-modulated according to address information or a system of recording wobbling phase-modulated according to address information. In the information reproduction apparatus of the present invention, the scope of application concerning an address information recording system is not limited. In addition, the information recorded by wobbling is not limited to address information.

In addition, the demodulation unit, error detection unit, coefficient control unit, and multiplication unit may be collectively provided as an integrated circuit (IC).

An operation or the like of the above configured error detection unit will be described in the following embodiments.

The following embodiments describe an example when the present invention is applied to an information reproduction apparatus for reading information (wobbling and address information, in particular) of an optical disk employing a system of recording address information by means of phase modulation.

### -- Other Embodiment --

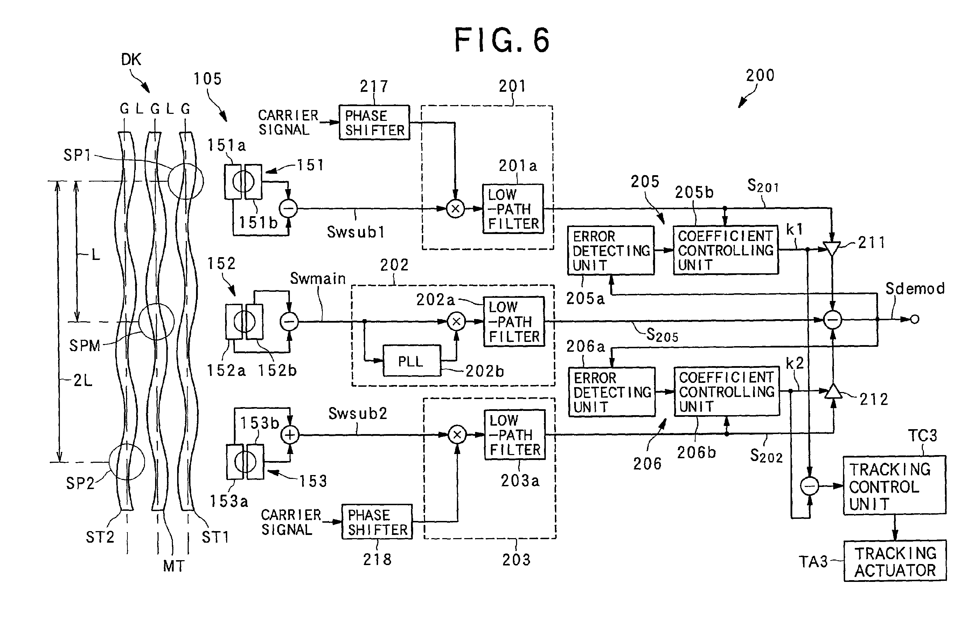

Hereinafter, other embodiments of the information reproduction apparatus according to the present invention will be described with reference to FIG. 6 to FIG. 16.

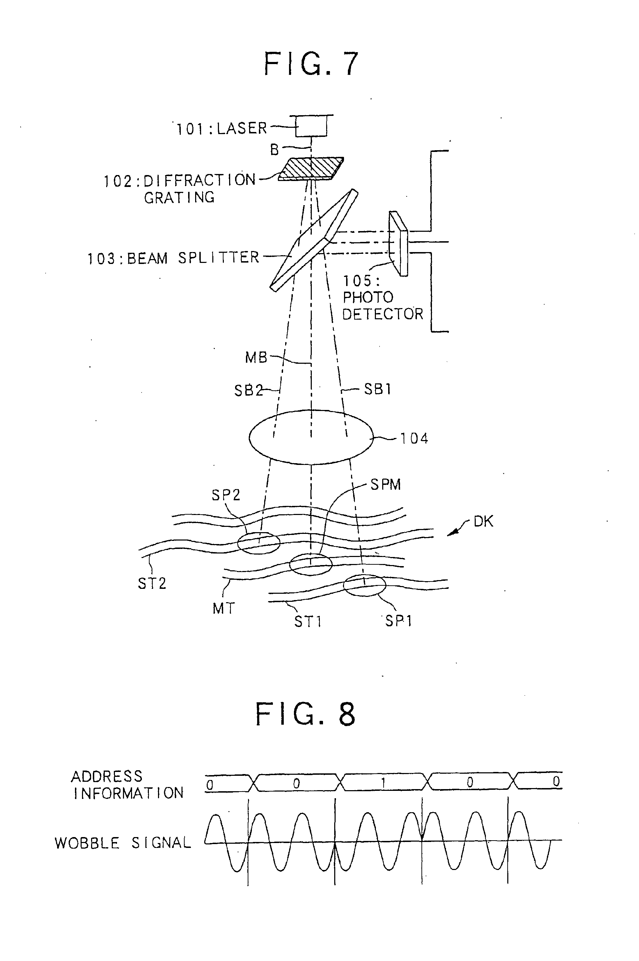

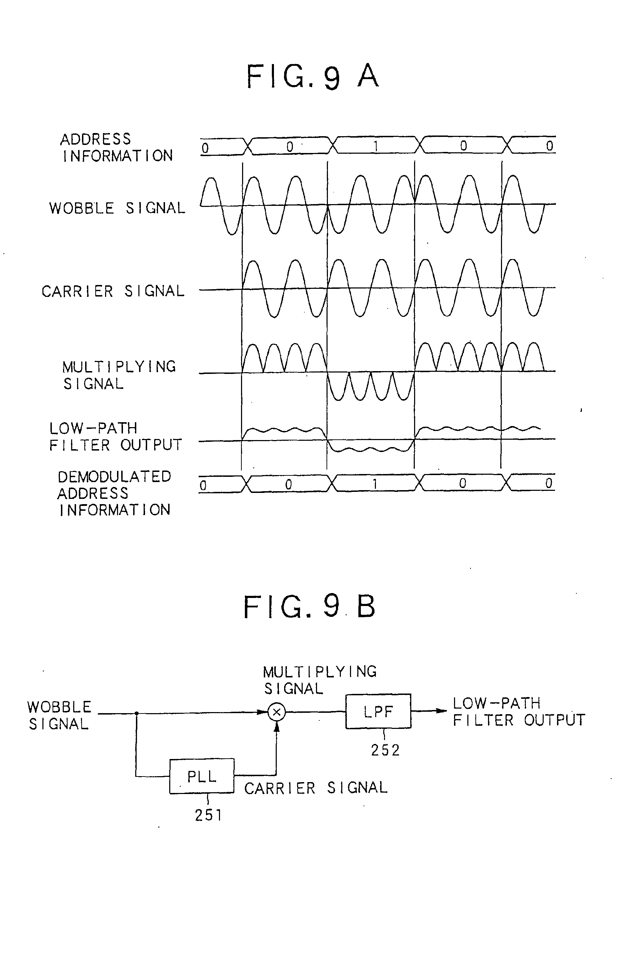

FIG. 6 is a circuit diagram depicting a configuration of the embodiment of the information reproduction apparatus, FIG. 7 is a view showing a configuration of an optical system for reading information recorded in an optical disk, FIG. 8 is a view showing an address information recording system. Further, FIG.9 is a view showing a demodulation method in demodulate units 201 to 203, respectively, FIG. 9A is a view showing a relationship among a wobble signal, a carrier signal, and a multiplication signal at a demodulation part, FIG. 9B is a view showing an exemplary circuit employed for demodulation at a demodulation part.

At first, a recording method of address information in an optical disc DK from which the information reproduction apparatus 400 reads information will be described.

As illustrated in FIG. 8, the address information of an optical disc DK is recorded into every group by using binary data, 0 and 1. As illustrated in FIG. 8 and FIG. 9, the groups are wobbled in a shape of a periodic sine wave, and the data 0 and 1 forming the address information are recorded as wobbles of one cycle having 0° and 180° phase respectively. The frequency of the wobble is positioned between the tracking servo bandwidth and the RF signal bandwidth.

Next, the information reproduction apparatus 400 will be described.

As illustrated in FIG. 6 and FIG. 7, the information reproduction apparatus 400 is provided with: a laser 101; a diffraction grating 102; a beam splitter 103; an objective lens 104; a photo detector 105; a demodulation unit 201 including a low-path filter 201a; a demodulation unit 202 including a low-path filter 202a and an PLL circuit 202b; a demodulation unit 203 including a low-path filter 203a; coefficient controlling units 205 and 206; and amplifiers 211 and 212.

Hereinafter, the details and operation of each unit will be described.

The laser 101 generates an optical beam B for reproducing information having a predetermined strength, and radiates it to the diffraction grating 102. The diffraction grating 102 divides the optical beam B into a main beam MB to be radiated on a main track MT where the information to be reproduced is recorded and sub beams SB1 and SB2 to be radiated on sub tracks ST1 and ST2 formed on the both sides adjacent to the main track, and the respective beams are radiated to the beam splitter 103.

The divided main beam MB and sub beams SB1 and SB2 pass through the beam splitter 103 and is radiated to the objective lens 104.

Thus, the objective lens 104 focuses the main beam MB, the sub beam SB1, and the sub beam SB2, respectively on the main track MT, the sub track ST1, and the sub track ST2. At this time, an optical spot SPM by the main beam MB is formed at a radiation position on the main track MT, an optical spot SP1 by the sub beam SB1 is formed at a radiation position on the sub track ST1, and an optical spot SP2 by the sub beam SB2 is formed at a radiation position on the sub track ST2. As illustrated in FIG. 8, the optical spot SPM, the optical spot SP1, and the optical spot SP2 are arranged in a direction inclined to a radius of the optical disc DK and they are placed at positions respectively deviated in the circumferential direction of the optical disc DK (reading direction of information).

The reflected lights of the main beam MB, the sub beam SB1, and the sub beam SB2 from the optical disc DK are converged on the beam splitter 103 through an inverse course of the original main beam MB and sub beams SB1 and SB2. Here, the polarization surfaces of the reflected lights of the main beam MB, sub beam SB1, and sub beam SB2 from the optical disc DK are rotated at a little angle, by the reflection of the optical disc DK.

Thus, the beam splitter 103 reflects the reflected lights whose polarization surfaces are rotated and separately radiates the respective reflected lights on the photo detector 105.

As illustrated in FIG. 6, the photo detector 105 has detectors 151, 152, and 153 for respectively receiving the three reflected lights and supplying push-pull signals. The respective detectors 151, 152, and 153 includes sensors 151a and 151b, sensors 152a and 152b, and sensors 153a and 153b respectively as a pair. The respective detectors 151, 152, and 153 generate three detected signals (push-pull signals) Swsub1, Swmain, and Swsub2 obtained as a difference between the detected signals of the respective sensors (for example, 152a and 152b).

Here, the detected signal Swmain corresponds to the reflected light of the main beam MB, the detected signal Swsub1 corresponds to the reflected light of the sub beam SB1, and the detected signal Swsub2 corresponds to the reflected light of the sub beam SB2.

The detected signal (push-pull signal) Swsub1 is supplied to the demodulation unit 201, the detected signal (push-pull signal) Swmain is supplied to the demodulation unit 202, and the detected signal (push-pull signal) Swsub2 is supplied to the demodulation unit 203.

Next, the operation of the demodulation units 201 to 203 will be described.

As illustrated in FIG. 9A, in the optical disc DK, the binary address information is recorded by two types of phase modulation; 0° and 180° of wobble signal (sine wave). After multiplying the carrier signal (sine wave of the phase 0° in FIG. 9A) by the wobble signal shown in FIG. 9A, a demodulation signal indicating the output values (binary) depending on the phase of the wobble signal can be obtained by passing the multiplying signal obtained by the multiplication through the low-path filters (the low-path filters 201a, 202a, and 203a).

As illustrated in FIG. 9B, the carrier signal can be generated by entering the wobble signal into the PLL circuit 251. The carrier signal is multiplied by the wobble signal, thereby generating a multiplying signal, and further the multiplying signal is supplied to the low-path filter 252, thereby obtaining a low-path filter output.

As illustrated in FIG. 6, in the demodulation unit 202, the detected signal Swmain is demodulated by using the carrier signal obtained by supplying the detected signal (push-pull signal) Swmain of the detector 152 to the PLL circuit 202b. As mentioned in the first embodiment, since the optical spots SP1, SPM, and SP2 radiated on the sub track ST1, the main track MT, and the sub track ST2 are respectively deviated in a direction of reading information, a use of the same carrier signal in all the demodulation units 201 to 203 could not cope with the phases of the detected signals read from the respective tracks. Therefore, the carrier signal generated by the PLL circuit 202b is not supplied directly to the demodulation units 201 and 203, but supplied to the demodulation unit 201 through the phase shifter 217 and to the demodulation unit 203 through the phase shifter 218. This phase shift of the carrier signal makes it possible to adjust the phase of the carrier signal entered into the demodulation units 201 and 203 to the phase of the detected signal.

In the coefficient controlling unit 205, the controlling coefficient k1 is supplied to the multiplier 211 based on the push-pull demodulation signal S₂₀₁ supplied from the low-path filter 201a of the demodulation unit 201 and the address demodulation signal Sdemod supplied at last.

In the coefficient controlling unit 206, the controlling coefficient k2 is supplied to the multiplier 212 based on a comparison between the push-pull demodulation signal S₂₀₂ supplied from the low-path filter 203a of the demodulation unit 203 and the address demodulation signal Sdemod supplied at last.

The output values of the multipliers 211 and 212 are subtracted from the push-pull demodulation signal S₂₀₅ supplied from the low-path filter 202a of the demodulation unit 202, thereby canceling the crosstalk depending on the respective coefficients k1 and k2 and generating the address demodulation signal Sdemod.

In the circuit of FIG. 6, a loop circuit formed by the coefficient controlling unit 205 and the multiplier 211 performs a feedback control for defining the coefficient k1 so as to minimize the crosstalk of the push-pull signal of the sub track ST1 included in the address demodulation signal Sdemod. A loop circuit formed by the coefficient controlling unit 206 and the multiplier 212 performs a feedback control for defining the coefficient k2 so as to minimize the crosstalk of the push-pull signal of the sub track ST2 included in the address demodulation signal Sdemod.

As shown in FIG. 6, the apparatus 400 is provided with: a tracking control unit TC3 for executing tracking control of a pickup; and a tracking actuator TA3 for driving the pickup.

As shown in FIG. 6, a difference between the coefficient k1 outputted from the coefficient control unit 205b and the coefficient k2 outputted from the coefficient control unit 206b is inputted to the tracking control unit TC3. The tracking control unit TC3 controls the tracking actuator TA3 according to a value of the difference between the coefficient k1 and the coefficient k2. Specifically, the tracking control unit TC3 controls the tracking actuator TA3 so that the difference between the coefficient k1 and the coefficient k2 is 0. In this manner, precise tracking control can be achieved, hardly affected by a radial tilt and a radial lens shift.

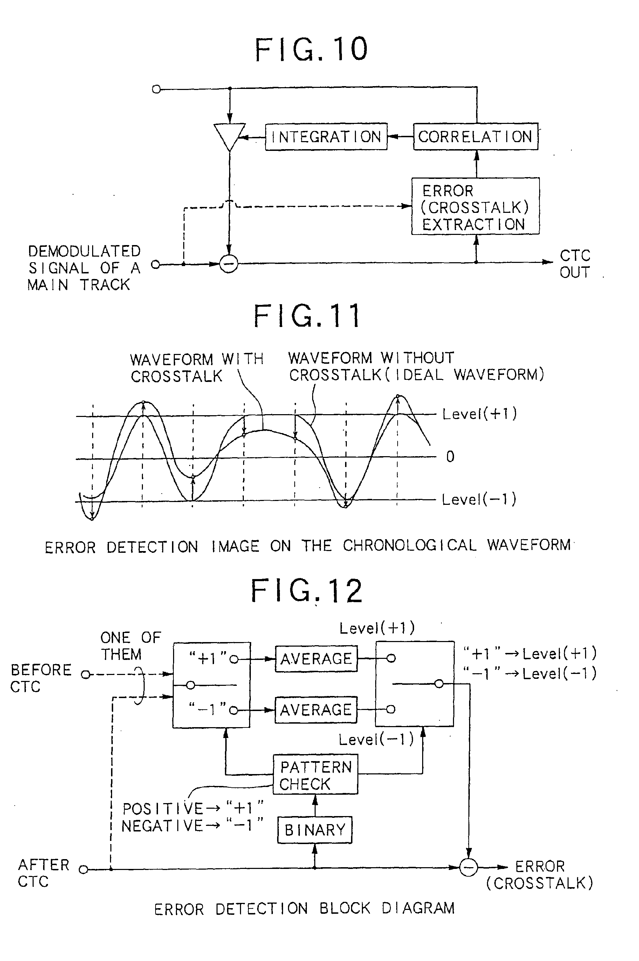

A control method of coefficient performed by the coefficient controlling unit will be described with reference to FIGS. 10 to 16. Although the coefficient control method will be described, for convenience sake, various methods described below can be applied not only to this embodiment but also to the above described basic structure.

FIG. 10 is a conceptual view showing one example of a method of controlling an adopted coefficient.

In the example shown in FIG. 10, an error (crosstalk) of the demodulated address signal of the main track after the crosstalk cancellation is detected, and a correlation between the error and the demodulated signal of the track (sub track) adjacent to the main track is examined. The signal of the adjacent tack is subtracted from the signal of the main track by the intensity depending on the coefficient determined by integrating the correlation value. According to this processing, when there is no correlation, in other words, when the crosstalk of the signal of the main track is completely canceled, the coefficient becomes stable as it is.

Next, method of detecting the error will be described.

As a method of detecting an error, there are methods shown in FIG. 11 and FIG. 12.

FIG. 11 is a view showing an ideal waveform including no crosstalk and a waveform after demodulation of the main track, and FIG. 12 is a schematic view showing a block diagram for detecting an error.

In this method, the value of the demodulated signal of the main track after the crosstalk cancellation is compared with reference levels (binary values of Level (+) and Level (-1)). Which reference level of the binary values to use is determined by converting the demodulated signal level of the main track to binary code (+1 and -1) and checking the data; if the check data is "+1", it may be compared with Level (+1), and if the check data is "-1", it may be compared with Level (-1). For example, the reference levels, Level (+1) and Level (-1) may be determined by averaging the demodulated signal level of the main track before the crosstalk cancellation for every check level ("+1" and "-1"). Alternatively, it may be determined by averaging the demodulated signal level of the main track after the crosstalk cancellation for every check level ("+" and "-1").

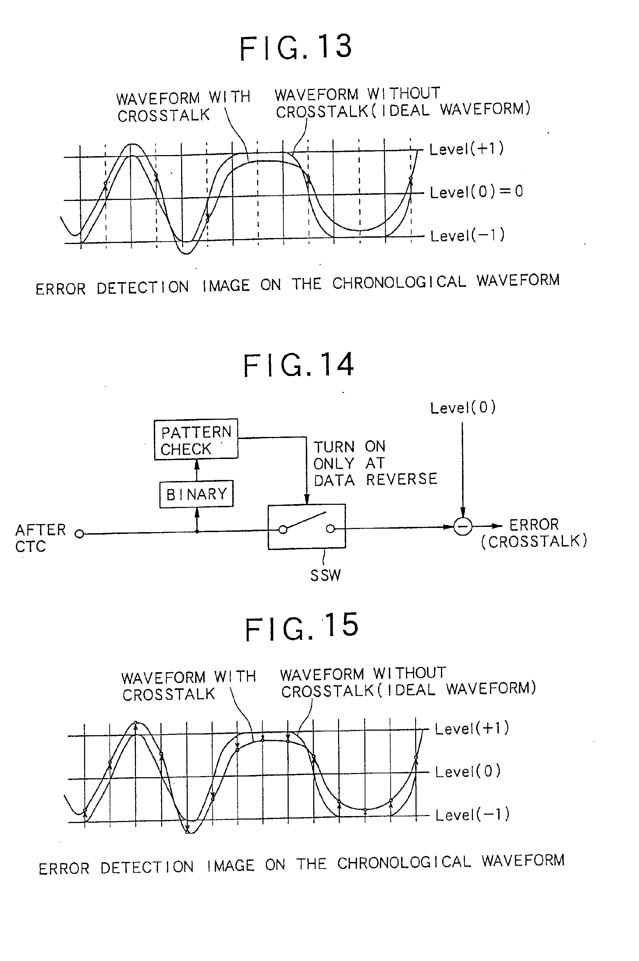

FIG. 13 and FIG. 14 show the case of using a level at a zero cross point as a method of detecting an error. FIG. 13 is a view showing a waveform after demodulation of the main track and an ideal waveform including no crosstalk, and FIG. 14 is a conceptual view showing a block diagram for detecting an error.

As illustrated in FIG. 13 and FIG. 14, this error detecting method adopts a signal level at a zero cross point in the demodulated signal of the main track after the crosstalk cancellation.

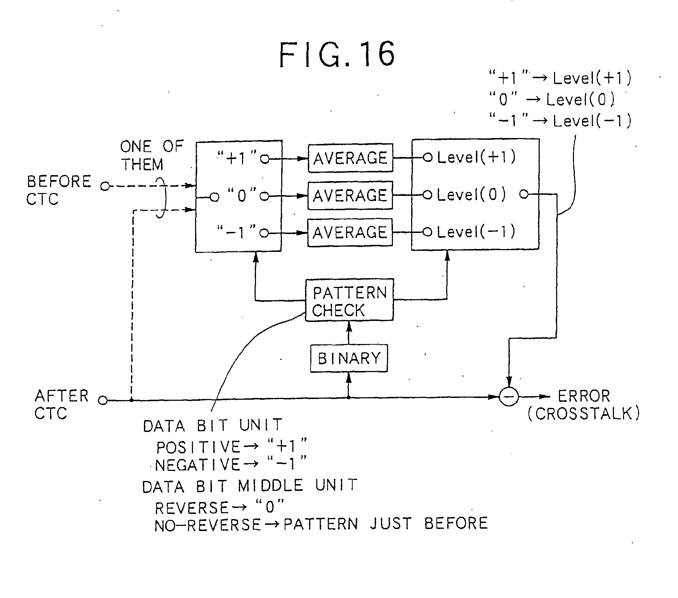

In this case, since the reference level is always Level (0), it is not necessary to switch reference levels and it has the advantage of ensuring an error detection without being influenced by the amplitude of a signal. At a zero cross point, however, it is necessary to sample a signal at a timing when the demodulated signal of the main track should be zero, and therefore, a sampling switch ssw becomes necessary. For example, as illustrated in FIG. 16, sampling at a zero cross point is enabled by turning on the sampling switch ssw in accordance with a timing of switching data when converting the demodulated signal level of the main track after the crosstalk cancellation to binary code.

In this method, the sampling value at a zero cross point is compared with the reference level, Level (0), and as illustrated in FIG. 12, the above difference is integrated to be averaged in time, hence to determine the coefficient.

The method shown in FIG. 15 and FIG. 16 is to compare the value of the demodulated signal of the main track after the crosstalk cancellation and the value at a zero cross point respectively with the reference levels (three values of Level (+1), Level (-1), and Level (0)), as a method of detecting an error. FIG. 17 is a view showing a waveform after demodulation of the main track and an ideal waveform including no crosstalk, and FIG. 16 is a conceptual view showing a block diagram for detecting an error.

This method is caused by combining the method shown in FIG. 11 and FIG. 12 with the method shown in FIG. 13 and FIG. 14. Which reference level of the three to use can be determined by the same way as shown in FIG. 11 and FIG. 12. Further, check at a zero cross point can be performed by the same way as shown in FIG. 13 and FIG. 14.

The reference level can be determined by averaging the demodulated signal level of the main track after the crosstalk cancellation for every check level ("+1", "0", and "-1"). Alternatively, it may be determined by averaging the demodulated signal level of the main track after the crosstalk cancellation for every check level ("+1", "0", and "-1").

Since an error of the demodulated signal of the main track after the crosstalk cancellation is extracted with respect to three values (+1, - 1, and 0) in this method, the number of samples for error detection is increased, thereby having the advantage of decreasing influence of noise on the coefficient control.

An AGC circuit applied to the information reproduction apparatus 500 or information reproduction apparatus 600 or a method of detecting a variety of signal by a two-dimensional vector are applied to each of the information reproduction apparatus described referring to FIGS. 1 to 16, whereby the foregoing problem can be solved, as in the information reproduction apparatuses 500 and 600.

As described above, according to an information reproduction apparatus of the present invention, tracking control of first detection means is executed based on a balance between a cross talk of a second track extracted by cross talk extraction means and a cross talk of a third clock. Thus, even if a radial lens shift or radial tilt occurs, precise tracking can be achieved.

## Claims

1. An information reproduction apparatus for reading information of an optical recording medium (DK), **characterized in that** the apparatus comprises:
a first detecting device (152) which supplies a difference between respective output signals optically obtained by a pair of detectors for reading information of a first track (MT);
a second detecting device (151) which supplies a difference between respective output signals optically obtained by a pair of detectors for reading information of a second track (ST1) adjacent to the first track (MT);
a third detecting device (153) which supplies a difference between respective output signals optically obtained by a pair of detectors for reading information of a third track (ST2) adjacent to the first track (MT), the third track (ST2) and the second track (ST1) being placed on opposite sides of the first track (MT);
a crosstalk extracting device (205, 206) which extracts crosstalk caused by the second track (ST1) and the third track (ST2), which is included in a detected signal supplied from the first detecting device (152); and
a tracking control device (TC3, TA3) which executes tracking control for the first detecting device (152) based on a balance between the crosstalk caused by the second track (ST1) and the crosstalk caused by the third track (ST2).

2. The information reproduction apparatus according to claim 1, wherein
the first detecting device (152), the second detecting device (151) and the third detecting device (153) detect wobbles of tracks formed on the optical recording medium (DK).

3. The information reproduction apparatus according to claim 1 or 2, wherein the apparatus further comprises:
a coefficient controlling device (205b, 206b) which controls a coefficient based on the crosstalk extracted by the crosstalk extracting device (205, 206); and
a crosstalk canceling device (211, 212) which cancels the above crosstalk based on the coefficient calculated by the coefficient controlling device (205, 206),
wherein the tracking control device (TC3, TA3) executes tracking control for the first detecting device (152) based on a balance between coefficients calculated by the coefficient controlling device (205b, 206b).

4. The information reproduction apparatus according to claim 3, wherein
the tracking control device (TC3, TA3) executes the tracking control so that a difference between a coefficient based on the crosstalk caused by the second track (ST1) and a coefficient based on the crosstalk caused by the third track (ST2) becomes zero.

5. The information reproduction apparatus according to claim 3, wherein the apparatus further comprises:
a first demodulating device (202) which demodulates a detected signal supplied from the first detecting device (152);
a second demodulating device (201) which demodulates a detected signal supplied from the second detecting device (151); and
a third demodulating device (203) which demodulates a detected signal supplied from the third detecting device (153),
wherein
the coefficient controlling device (205b, 206b) which controls the coefficient based on the crosstalk extracted by a demodulated signal obtained by the first demodulating device (202).

6. The information reproduction apparatus according to claim 5, wherein
the first demodulating device (58), the second demodulating device (57) and the third demodulating device (59) demodulate the detected signal by use of two carrier signals having different phases respectively.

7. The information reproduction apparatus according to claim 5, wherein the apparatus further comprises:
a carrier signal generating device (86) which generates a carrier signal of the fist track (MT), the carrier signal being supplied to the second demodulating device (201) and the third demodulating device (203); and
a phase adjusting device (217, 218) which adjusts phases of the carrier signals in conformity to the phases of outputted signals from the first detecting device (152), the second detecting device (151) and the third detecting device (153).

8. The information reproduction apparatus according to any one of claims 5 to 7, wherein
the first demodulating device (202), the second demodulating device (201) and the third demodulating device (203) demodulates wobbles which are phase-demodulated.

9. The information reproduction apparatus according to any one of claims 1 to 8, wherein
the apparatus further comprises a compensation device (217, 218) which compensates for timing corresponding to the displacements in the directions of reading information in the first detecting device (152), the second detecting device (151) and the third detecting device (153),
wherein
the tracking control device (TC, TA) executes tracking control for the first detecting device (152) based on a balance between the crosstalk caused by the second track (ST1) and the crosstalk caused by the third track (ST2), which are extracted by the crosstalk extracting device (205, 206), under the condition where the compensation device (217, 218) compensates for timing of signals supplied from the first detecting device (152), the second detecting device (151) and the third detecting device (153) so as to be in phase with each other.

10. The information reproduction apparatus according to claim 9, wherein the apparatus further comprises a crosstalk balance adjusting device (51, 53) which adjusts the balance between the crosstalk caused by the second track (ST1) and the crosstalk caused by the third track (ST2) in response to signal amplitudes of detected signals (Ssub1, Ssub2) supplied from the second detecting device (151) and the third detecting device (153).

11. The information reproduction apparatus according to claim 10, the crosstalk balance adjusting device (51, 53) keeps outputted signals (Ssub1, Ssub2) from the second detecting device (151) and the third detecting device (153) at a constant level.

12. The information reproduction apparatus according to claim 10, the crosstalk balance adjusting device (82, 83) adjusts the balance in response to signal amplitudes of detected signals (Ssub1, Ssub2) supplied from the second detecting device (151) and the third detecting device (153), the balance being obtained on the basis of the crosstalk extracted by the crosstalk extracting device (78, 79).

13. The information reproduction apparatus according to any one of claims 10 to 12, the crosstalk balance adjusting device (51, 53) adjusts the balance on the basis of a signal obtained by demodulating the detected signal (Ssub1, Ssub2) supplied from the second detecting device (151) and the third detecting device (153).

14. The information reproduction apparatus according to claim 9, the crosstalk balance adjusting device (52) adjusts a value of the crosstalk extracted by the crosstalk extracting device (61, 62), in response to signal amplitudes of detected signals supplied from the first detecting device (152).

15. An optical recording medium (DK) in which information is recorded by use of a groove recording method and modulated and wobbled, the medium in which further information can be recorded, wherein
a value obtained by normalizing a track pitch by λ /NA is between 0.625 and 0.690 wherein λ indicates a wavelength of an optical system for recording and reproduction, and NA indicates the number of apertures of an objective lens (104) in the optical system.
